# EUROPEAN PATENT APPLICATION

(11) **EP 4 339 765 A1**
(43) Date of publication of application: **20.03.2024**
(21) Application number: 22810341.2
(22) Date of filing: 07.05.2022
(51) Int. Cl.: G06F 3/14

(54) **METHOD FOR DISPLAYING MULTIPLE INTERFACES, AND ELECTRONIC DEVICE**

(30) Priority: 28.05.2021 CN 202110590818
(71) Applicant: Huawei Technologies Co., Ltd., Longgang Shenzhen, Guangdong 518129 (CN)
(72) Inventor: HAN, Guohui, Shenzhen, Guangdong 518129 (CN)
(74) Representative: Huawei European IPR
(86) International application number: PCT/CN2022/091430
(87) International publication number: WO 2022/247614

(57) **Abstract**

This application provides a multi-interface display method and an electronic device. The method is applied to an electronic device. In response to a gesture operation of a user, the electronic device may quickly switch a display manner of an interface so that an interface displayed in a floating window can be quickly switched to be displayed in full screen or on a split screen. This improves user experience, makes human-computer interaction more interesting, and enriches operation manners. In addition, an interface may be changed through a gesture. Therefore, efficiency is improved.

## Description

This application claims priority to Chinese Patent Application No. 202110590818.3, filed with the China National Intellectual Property Administration on May 28, 2021 and entitled "MULTI-INTERFACE DISPLAY METHOD AND ELECTRONIC DEVICE", which is incorporated herein by reference in its entirety.

### TECHNICAL FIELD

This application relates to the field of electronic devices, and in particular, to a multi-interface display method and an electronic device.

### BACKGROUND

As a screen of an electronic device becomes larger, a requirement for a multi-interface operation continuously increases. An existing multi-interface operation manner is single. When operating an interface, a user needs to tap a control on the interface to change a display manner of the interface. The control occupies a part of space on the interface. Consequently, display space of a screen of an electronic device cannot be fully utilized. In addition, an operation cannot be conveniently performed, and the display manner of the interface cannot be quickly changed, resulting in poor user experience and boring human-computer interaction.

### SUMMARY

This application provides a multi-interface display method and an electronic device. The method enriches multi-interface operation manners, and implements fast full-screen or split-screen display of a plurality of interfaces. In addition, the method improves user experience and makes human-computer interaction more interesting.

According to a first aspect, a multi-interface display method is provided, applied to a first electronic device. The method includes: The first electronic device displays a first interface and displays, in a floating window, a second interface. The first electronic device detects a first gesture performed on the floating window by a user. The first electronic device displays a first control and a second control in response to the first gesture. When the first control is selected, the first electronic device displays the second interface in full screen. Alternatively, when the second control is selected, the first electronic device displays the first interface and the second interface on a split screen.

In this embodiment of this application, the first electronic device may display a plurality of interfaces, and may display a plurality of controls in response to a first gesture operation of the user. The user may select different controls to implement full-screen display or split-screen display of the interface. This improves user experience, makes human-computer interaction more interesting, and enriches operation manners. In addition, the controls are displayed after response to the first gesture operation is provided, so that display space of a screen can be fully utilized.

With reference to the first aspect, in some implementations of the first aspect, before the second interface is displayed, the method further includes: The first electronic device establishes a connection to a second electronic device. The first electronic device receives first content sent by the second electronic device, where the second interface is a display interface corresponding to the first content.

In this embodiment of this application, the first electronic device and the second electronic device are connected to implement multi-screen collaboration. The first electronic device may display a plurality of controls by detecting the first gesture operation of the user. The user may select different controls to implement full-screen display or split-screen display of an interface. This improves user experience, makes human-computer interaction more interesting, and enriches operation manners.

With reference to the first aspect, in some implementations of the first aspect, that the first electronic device displays a first control and a second control in response to the first gesture includes: The first electronic device displays the first control and the second control on the first interface.

With reference to the first aspect, in some implementations of the first aspect, that the first electronic device displays a first control and a second control in response to the first gesture includes: The first electronic device displays the first control and the second control on the second interface.

With reference to the first aspect, in some implementations of the first aspect, the first interface is a full-screen interface or the first interface is an interface displayed on a split screen with a third interface.

With reference to the first aspect, in some implementations of the first aspect, the first electronic device highlights the second interface in response to the detected first gesture.

With reference to the first aspect, in some implementations of the first aspect, the first electronic device scales down the floating window in response to the detected first gesture.

With reference to the first aspect, in some implementations of the first aspect, the first gesture is a touch gesture or a mid-air gesture.

With reference to the first aspect, in some implementations of the first aspect, the touch gesture includes a slide of a finger of the user in a preset direction, or a long press of a finger of the user; or the mid-air gesture includes a slide of a finger of the user in a preset direction in a mid-air manner.

According to a second aspect, a multi-interface display method is provided, applied to a first electronic device. The method includes: The first electronic device displays a first interface and displays, in a floating window, a second interface. The first electronic device displays the second interface in a non-floating-window manner when detecting an operation gesture for the floating window.

In this embodiment of this application, the first electronic device may simultaneously display a plurality of interfaces, and may implement full-screen display or split-screen display of the interface by detecting an operation gesture of a user. This improves user experience, makes human-computer interaction more interesting, and enriches operation manners. In addition, a display manner of an interface is directly changed based on the operation gesture, which avoids a control. Therefore, display space of a screen can be fully utilized.

With reference to the second aspect, in some implementations of the second aspect, that the first electronic device displays the second interface in a non-floating-window manner includes: The second interface is displayed in full screen, or the first interface and the second interface are displayed on a split screen.

With reference to the second aspect, in some implementations of the second aspect, that the first electronic device displays the second interface in a non-floating-window manner when detecting an operation gesture for the floating window includes: The first electronic device displays the second interface in full screen when detecting a first gesture for the floating window; or the first electronic device displays the first interface and the second interface on the split screen when detecting a second gesture for the floating window.

In this embodiment of this application, the first electronic device may simultaneously display a plurality of interfaces, and implement full-screen display or split-screen display of the interface by detecting different gestures of the user. This improves user experience, makes human-computer interaction more interesting, and enriches operation manners.

With reference to the second aspect, in some implementations of the second aspect, the first electronic device associates the first gesture with a full-screen display manner when receiving a first setting operation of a user, where the first setting operation is used to indicate that the first gesture is associated with the full-screen display manner; and/or the first electronic device associates the second gesture with a split-screen display manner when receiving a second setting operation of the user, where the second setting operation is used to indicate that the second gesture is associated with the split-screen display manner.

With reference to the second aspect, in some implementations of the second aspect, when receiving a display manner setting operation of the user, the first electronic device sets the non-floating-window display manner to a full-screen display manner or a split-screen display manner, where the display manner setting operation is used to indicate that the non-floating-window manner is either the full-screen display manner or the split-screen display manner.

With reference to the second aspect, in some implementations of the second aspect, the first interface is a full-screen interface or the first interface is an interface displayed on a split screen with a third interface.

With reference to the second aspect, in some implementations of the second aspect, the first electronic device highlights the second interface in response to the detected operation gesture.

With reference to the second aspect, in some implementations of the second aspect, the operation gesture is a touch gesture or a mid-air gesture.

With reference to the second aspect, in some implementations of the second aspect, the touch gesture includes a slide of a finger of the user in a preset direction, or a long press of a finger of the user; or the mid-air gesture includes a slide of a finger of the user in a preset direction in a mid-air manner.

According to a third aspect, an electronic device is provided in an embodiment of this application. The electronic device includes modules/units that perform the method according to any one of the foregoing aspects or the possible designs of the foregoing aspects. These modules/units may be implemented by hardware, or may be implemented by hardware by executing corresponding software.

According to a fourth aspect, a chip is provided in an embodiment of this application. The chip is coupled to a memory in an electronic device, and is configured to: invoke a computer program stored in the memory and perform the technical solution according to any one of the foregoing aspects and the possible designs of the foregoing aspects. In this embodiment of this application, "coupling" means that two components are directly or indirectly combined with each other.

According to a fifth aspect, a computer-readable storage medium is provided in an embodiment of this application. The computer-readable storage medium includes a computer program. When the computer program is run on an electronic device, the electronic device is enabled to perform the technical solution according to any one of the foregoing aspects and the possible designs of the foregoing aspects.

According to a sixth aspect, a computer program is provided in an embodiment of this application, where the computer program includes instructions. When the instructions are run on a computer, the computer is enabled to perform the technical solution according to any one of the foregoing aspects and the possible designs of the foregoing aspects.

According to a seventh aspect, a graphical user interface on an electronic device is provided in an embodiment of this application. The electronic device has a display, one or more memories, and one or more processors. The one or more processors are configured to execute one or more computer programs stored in the one or more memories. The graphical user interface includes a graphical user interface displayed when the electronic device performs the technical solution according to any one of the foregoing aspects and the possible designs of the foregoing aspects.

For beneficial effects of the third aspect to the seventh aspect, refer to the beneficial effects of the first aspect and the second aspect. Details are not described.

### BRIEF DESCRIPTION OF DRAWINGS

FIG. 1 is a schematic diagram of a structure of an electronic device according to an embodiment of this application;
FIG. 2 is a block diagram of a software structure of an electronic device according to an embodiment of this application;
FIG. 3(a) to FIG. 3(d) show a group of GUIs according to an embodiment of this application;
FIG. 4(a) to FIG. 4(f) show another group of GUIs according to an embodiment of this application;
FIG. 5(a) to FIG. 5(e) show another group of GUIs according to an embodiment of this application;
FIG. 6(a) to FIG. 6(c) show another group of GUIs according to an embodiment of this application;
FIG. 7(a) to FIG. 7(d) show another group of GUIs according to an embodiment of this application;
FIG. 8(a) to FIG. 8(d) show another group of GUIs according to an embodiment of this application;
FIG. 9(a) to FIG. 9(d) show another group of GUIs according to an embodiment of this application;
FIG. 10(a) to FIG. 10(c) show another group of GUIs according to an embodiment of this application;
FIG. 11(a) to FIG. 11(d) show another group of GUIs according to an embodiment of this application; and
FIG. 12 is a block diagram of a software structure of an electronic device according to an embodiment of this application.

### DESCRIPTION OF EMBODIMENTS

Terms used in the following embodiments are merely intended to describe particular embodiments, but are not intended to limit this application. As used in this specification and appended claims of this application, singular expressions "one", "a", "the", "the foregoing", "this", and "the one" are also intended to include expressions such as "one or more", unless the contrary is clearly indicated in the context. It should be further understood that in the following embodiments of this application, "at least one" and "one or more" refer to one, two, or more. The term "and/or" is used to describe an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

The following describes an electronic device, a user interface used for such an electronic device, and embodiments in which such an electronic device is used. In some embodiments, the electronic device may be a portable electronic device that further includes other functions such as a personal digital assistant function and/or a music player function, for example, a mobile phone, a tablet, or a wearable electronic device having a wireless communication function (for example, a smartwatch). An example embodiment of the portable electronic device includes but is not limited to a portable electronic device provided with iOS^{®}, Android^{®}, Microsoft^{®}, or another operating system. The portable electronic device may alternatively be another portable electronic device, such as a laptop computer (Laptop). It should be further understood that, in some other embodiments, the foregoing electronic device may not be the portable electronic device but a desktop computer.

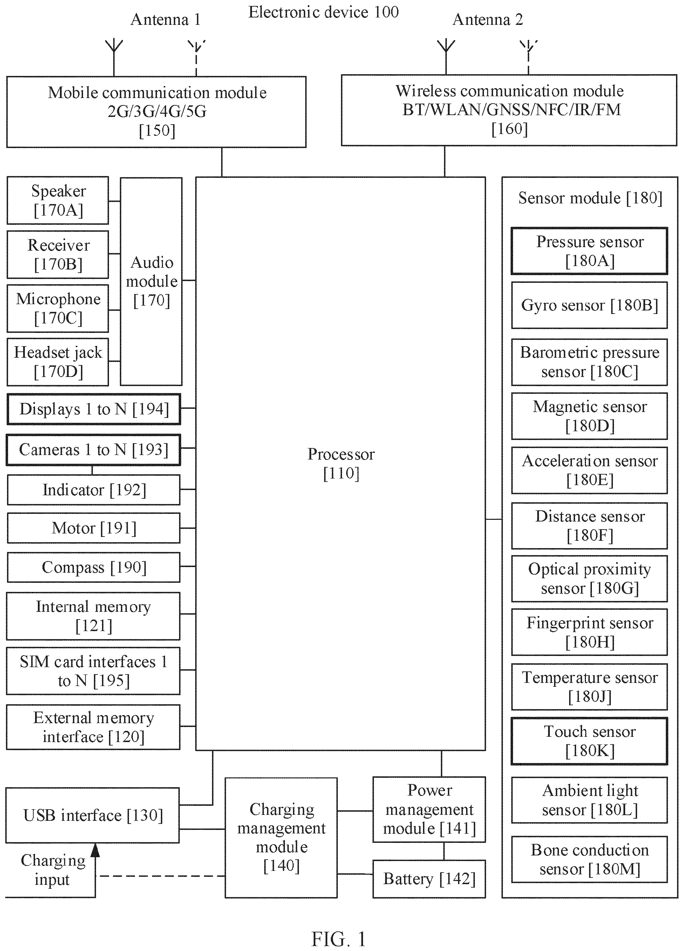

For example, FIG. 1 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a compass 190, a motor 191, an indicator 192, a camera 193, a display 194, a subscriber identification module (subscriber identification module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, some components may be combined, some components may be split, or different component arrangements may be used. The illustrated components may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. In some embodiments, the electronic device 101 may alternatively include one or more processors 110. The controller may generate an operation control signal based on instruction operation code and a time sequence signal, to control instruction reading and instruction execution. In some other embodiments, a memory may further be disposed in the processor 110, to store instructions and data. For example, the memory in the processor 110 may be a cache. The memory may store instructions that have just been used or repeatedly used by the processor 110 or data that has just been used or repeatedly used by the processor 110. If the processor 110 needs to use the instructions or data again, the processor may directly invoke the instructions or data from the memory. This avoids repeated access and shortens a waiting time period of the processor 110, thereby improving data processing or instruction execution efficiency of the electronic device 101.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface 130 is an interface that conforms to a USB standard specification, and may be specifically a mini USB interface, a micro USB interface, a USB type-C interface, or the like. The USB interface 130 may be configured to connect to a charger to charge the electronic device 101, or may be configured to transmit data between the electronic device 101 and a peripheral device. The USB interface 130 may alternatively be configured to connect to a headset to play audio by using the headset.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from an interface connection manner in this embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input by using a wireless charging coil of the electronic device 100. Further, the charging management module 140 may supply power to the electronic device by using the power management module 141 while charging the battery 142.

The power management module 141 is configured to connect to the battery 142, the charging management module 140, and the processor 110. The power management module 141 receives an input from the battery 142 and/or an input from the charging management module 140, to supply power to the processor 110, the internal memory 121, an external memory, the display 194, the camera 193, the wireless communication module 160, and the like. The power management module 141 may further be configured to monitor parameters such as a battery capacity, a battery cycle count, and a battery health state (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 each are configured to transmit and receive an electromagnetic wave signal. Each antenna in the electronic device 100 may be configured to cover one or more communication frequency bands. Different antennas may be multiplexed to improve antenna utilization. For example, the antenna 1 may be multiplexed as a diversity antenna in a wireless local area network. In some other embodiments, an antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same component.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components integrating at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 implements a display function through the GPU, the display 194, the application processor, and the like. The GPU is a microprocessor for image processing and is connected to the display 194 and the application processor. The GPU is configured to perform mathematical and geometric computation for graphic rendering. The processor 110 may include one or more GPUs that execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or more displays 194.

In some embodiments of this application, the display 194 in FIG. 1 is foldable when the display panel is made of a material such as an OLED, an AMOLED, or an FLED. Herein, that the display 194 may be folded means that the display may be folded to any angle at any part and may be maintained at the angle. For example, the display 194 may be folded left and right in the middle, or may be folded up and down in the middle.

The display 194 of the electronic device 100 may be a flexible display. Currently, the flexible display attracts much attention because of a unique feature and huge potential of the flexible screen. Compared with a conventional screen, the flexible screen features strong flexibility and foldability, and can provide a user with a new foldability-based interaction mode, to meet more requirements of the user on the electronic device. For an electronic device configured with a foldable display, the foldable display on the electronic device may be switched between a small screen in a folded form and a large screen in an expanded form at any time. Therefore, the user uses a split-screen function more frequently on the electronic device configured with the foldable display.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, so as to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as an RGB format or a YUV format. In some embodiments, the electronic device 100 may include one or more cameras 193. In this embodiment of this application, the camera 193 may capture a mid-air gesture of the user.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, MPEG-4, and the like.

The NPU is a neural-network (neural-network, NN) computing processor. The NPU quickly processes input information based on a structure of a biological neural network, for example, based on a transfer mode between human brain neurons; and may further continuously perform self-learning. Applications such as intelligent cognition of the electronic device 100, for example, image recognition, facial recognition, speech recognition, and text understanding, may be implemented by using the NPU.

The external memory interface 120 may be configured to connect to an external storage card, for example, a micro SD card, to extend a storage capability of the electronic device 100. The external memory card communicates with the processor 110 through the external memory interface 120, to implement a data storage function. For example, files such as music and a video are stored in the external storage card.

The internal memory 121 may be configured to store one or more computer programs, and the one or more computer programs include instructions. The processor 110 may run the instructions stored in the internal memory 121. The internal memory 121 may include a program storage area and a data storage area. The program storage area may store an operating system. The program storage area may further store one or more applications (for example, Gallery and Contacts), and the like. The data storage area may store data (for example, a photo and a contact) created during use of the electronic device 101, and the like. In addition, the internal memory 121 may include a high-speed random access memory, and may further include a nonvolatile memory, for example, one or more magnetic disk storage devices, a flash storage device, or a universal flash storage (universal flash storage, UFS). In some embodiments, the processor 110 may run the instructions stored in the internal memory 121 and/or the instructions stored in the memory that is disposed in the processor 110, to enable the electronic device 101 to perform the method provided in embodiments of this application, another application, and data processing. The electronic device 100 may implement audio functions, such as a music playing function and a recording function, by using the audio module 170, the speaker 170A, the receiver 170B, the microphone 170C, the headset jack 170D, the application processor, and the like.

The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The pressure sensor 180A is configured to sense a pressure signal, and can convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines a pressure intensity based on a capacitance change. When a touch operation is performed on the display 194, the electronic device 100 detects an intensity of the touch operation based on the pressure sensor 180A. The electronic device 100 may calculate a touch position based on a detection signal of the pressure sensor 180A. In some embodiments, touch operations that are performed in a same touch position but have different touch operation intensities may correspond to different operation instructions. For example, when a touch operation whose touch operation intensity is less than a first pressure threshold is performed on a Messages application icon, an instruction for viewing an SMS message is executed. When a touch operation whose touch operation intensity is greater than or equal to the first pressure threshold is performed on the Messages application icon, an instruction for creating a new SMS message is performed.

The gyro sensor 180B may be configured to determine a motion posture of the electronic device 100. In some embodiments, an angular velocity of the electronic device 100 around three axes (namely, axes X, Y, and Z) may be determined by using the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance that needs to be compensated for by a lens module, and enables the lens to counteract the jitter of the electronic device 100 through reverse motion. In this way, image stabilization is ensured. The gyro sensor 180B may be further used in a navigation scenario and a motion-sensing game scenario.

The acceleration sensor 180E may detect accelerations in various directions (usually on three axes) of the electronic device 100, and may detect a magnitude and a direction of gravity when the electronic device 100 is static. The acceleration sensor 180E may be further configured to identify a posture of the electronic device, and is used in screen switching between a landscape mode and a portrait mode, a pedometer, or another application.

The ambient light sensor 180L is configured to sense brightness of ambient light. The electronic device 100 may adaptively adjust brightness of the display 194 based on the sensed brightness of ambient light. The ambient light sensor 180L may also be configured to automatically adjust white balance during photographing. The ambient light sensor 180L may further corporate with the optical proximity sensor 180G to detect whether the electronic device 100 is in a pocket, to prevent an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 reduces performance of a processor located near the temperature sensor 180J, to reduce power consumption and implement thermal protection. In some other embodiments, when the temperature is lower than another threshold, the electronic device 100 heats the battery 142, to avoid abnormal shutdown of the electronic device 100 caused by a low temperature. In some other embodiments, when the temperature is lower than still another threshold, the electronic device 100 increases an output voltage of the battery 142, to avoid abnormal shutdown caused by a low temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation on or near the touch sensor. The touch sensor may transfer the detected touch operation to the application processor to determine a type of a touch event. A visual output related to the touch operation may be provided on the display 194. In some other embodiments, the touch sensor 180K may alternatively be disposed on a surface of the electronic device 100 at a position different from that of the display 194.

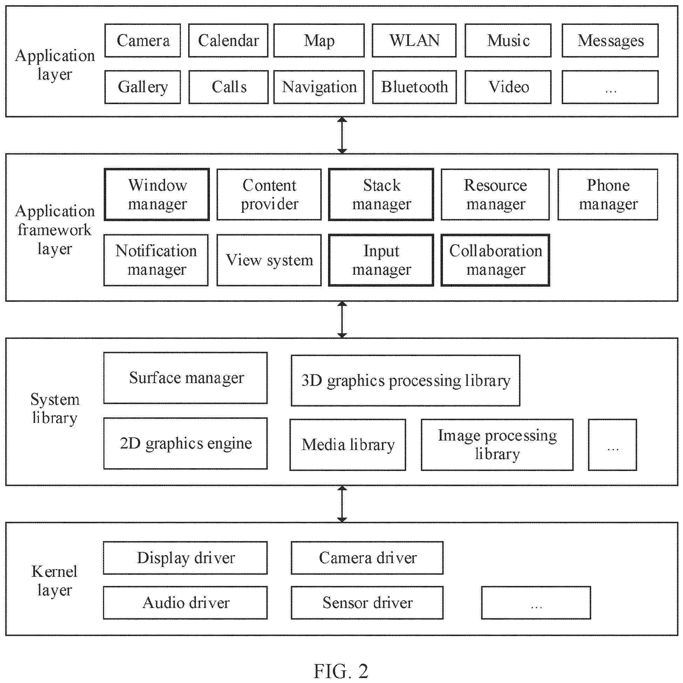

FIG. 2 is a block diagram of a software structure of the electronic device 100 in this embodiment of this application. In a layered architecture, software is divided into several layers, and each layer has a clear role and responsibility. The layers communicate with each other through a software interface. In some embodiments, an Android system is divided into four layers: an application layer, an application framework layer, an Android runtime (Android runtime) and a system library, and a kernel layer from top to bottom. The application layer may include a series of application packages.

As shown in FIG. 2, the application packages may include applications such as Camera, Gallery, Calendar, Calls, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a gesture manager, a resource manager, a notification manager, and the like.

An input manager is configured to obtain, from a bottom-layer display system, a gesture operation (for example, an operation such as a single-tap operation, a double-tap operation, a triple-tap operation, sliding up and down, or sliding left and right) detected on a screen, and is further configured to obtain a detected mid-air gesture from the camera. The input manager may send information about a corresponding gesture to the window manager, so that the window manager executes a corresponding display policy.

The window manager is configured to manage a window program. The window manager may obtain a size of a display, determine whether there is a status bar, perform screen locking, take a screenshot, and the like; and is further configured to: receive gesture information sent by the input manager, and perform a corresponding display policy.

The stack manager is configured to manage switching between a split-screen stack and a full-screen stack. In this embodiment of this application, when the user chooses to display an interface in full screen, the stack manager may switch to the full-screen stack. Similarly, when the user chooses to display an interface on a split screen, the stack manager may switch to the split-screen stack.

A collaboration manager is configured to manage content display of a collaboration window.

The content provider is configured to: store and retrieve data, and enable the data to be accessed by an application. The data may include a video, an image, audio, calls that are made and answered, a browsing history, a bookmark, an address book, and the like.

The view system includes visual controls, such as a control for displaying text, a control for displaying an image, and the like. The view system may be configured to build an application. A display interface may include one or more views. For example, a display interface including a short message notification icon may include a view for displaying text and a view for displaying an image.

A phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in the status bar, and may be configured to convey a notification message, which may automatically disappear after a short pause without user interaction. For example, the notification manager is configured to notify download completion, provide a message notification, and the like. The notification manager may alternatively display a notification in a top status bar of the system in a form of a chart or scrollable text, for example, a notification of an application running in the background or a notification that appears on the screen in a form of a dialog box. For example, text information is displayed in the status bar, a prompt tone is given, the electronic device vibrates, or the indicator light blinks.

The system library may include a plurality of functional modules, for example, a surface manager (surface manager), a media library (media library), a 3D graphics processing library (such as OpenGL ES), and a 2D graphics engine (such as SGL).

The surface manager is configured to manage a display subsystem and provides fusion of 2D and 3D layers for a plurality of applications.

The media library supports playback and recording of various common audio and video formats, static image files, and the like. The media library may support a plurality of audio and video encoding formats, such as MPEG-4, H.264, MP3, AAC, AMR, JPG, and PNG.

The 3D graphics processing library is configured to implement 3D graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

For ease of understanding, in the following embodiments of this application, an electronic device having the structures shown in FIG. 1 and FIG. 2 is used as an example to describe in detail, with reference to the accompanying drawings and an application scenario, a multi-interface operation method provided in embodiments of this application.

Before embodiments of this application are described, concepts related to embodiments of this application are first described.

Multi-screen collaboration: Different electronic devices (such as a mobile phone, a tablet, a computer, and a television) may be compatible with each other for performing operations across the devices, and transmission of information (such as a video, an image, or a file) is implemented by establishing a connection between the electronic devices. Multi-screen collaboration can implement sharing of displayed content between different electronic devices. Multi-screen collaboration includes the following modes: (1) Content analysis mode: Different electronic devices can implement multi-screen collaboration through content. (2) Interface analysis mode: Different electronic devices implement multi-screen collaboration by analyzing a system interface or an application interface. (3) Remote control mode: One electronic device is used to control another electronic device to implement multi-screen interaction.

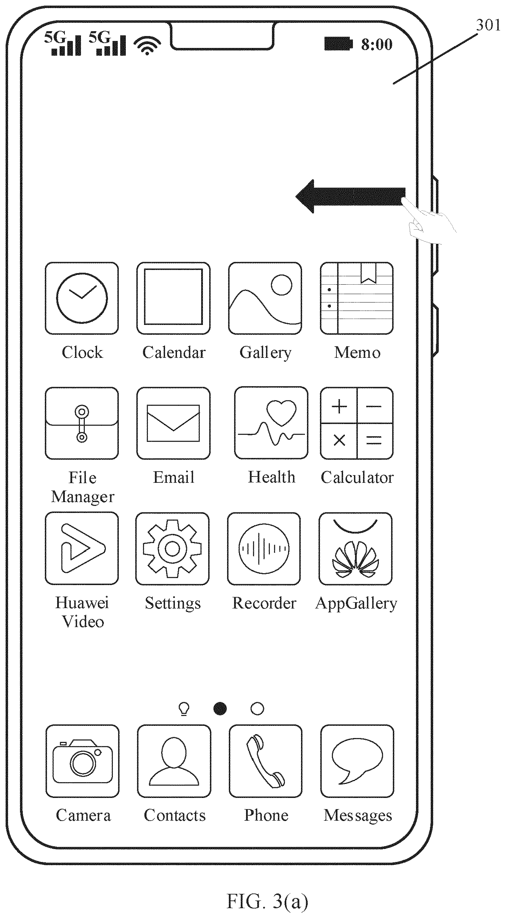

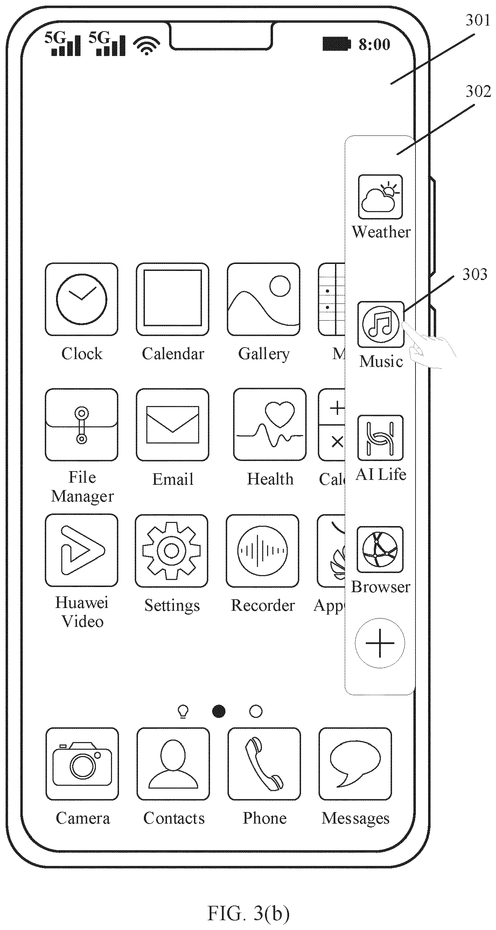

FIG. 3(a) to FIG. 3(d) show a group of graphical user interfaces (graphical user interface, GUI) provided in a conventional technology. As shown in FIG. 3(a), an electronic device displays an interface 301, where the interface may include an application icon. When detecting an operation of opening a task bar (dock bar) by a user, the electronic device may display, in response to the operation, a GUI shown in FIG. 3(b).

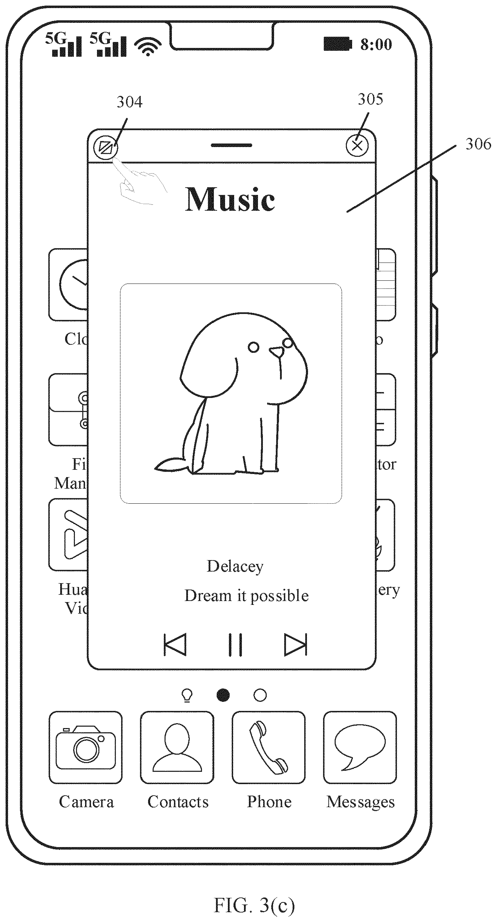

As shown in FIG. 3(b), the electronic device displays a dock bar 302 on a right side of the interface 301 in response to the operation of opening the dock bar by the user, where the dock bar may include one or more application icons. The electronic device detects an operation of tapping a music application icon 303 by the user, and may display, in response to the operation, a GUI shown in FIG. 3(c).

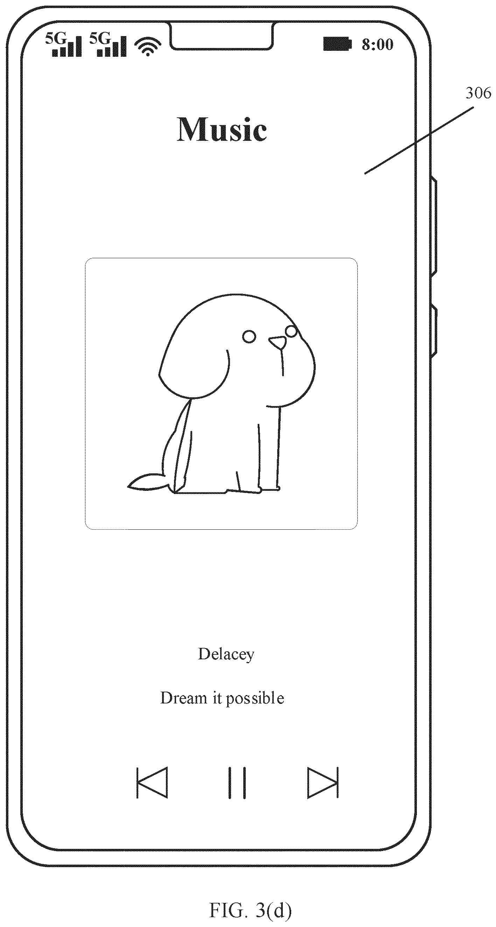

As shown in FIG. 3(c), the electronic device may display an interface 306 in a form of a floating window in response to the operation of tapping the music application icon 303 by the user. The interface 306 is an interface of a music application. The interface 306 may include a zoom-in control 304 and a close control 305. The zoom-in control 304 is used to control the interface 306 to be zoomed in, and the close control 305 is used to control the interface 306 to be closed. For example, as shown in FIG. 3(c) and FIG. 3(d), the electronic device detects an operation of tapping the zoom-in control 304 by the user, and may display the interface 306 in full screen in response to the operation.

Currently, as a screen of an electronic device becomes larger, a multi-interface operation is performed more frequently. However, a method for performing the multi-interface operation in a conventional technology is single, and a user can control a floating window only by tapping a zoom-in control or a close control, which lacks interaction. In view of this, an embodiment of this application provides a multi-interface operation method. The user may control a floating window through a plurality of operation gestures, which enhances human-computer interaction and improves user experience.

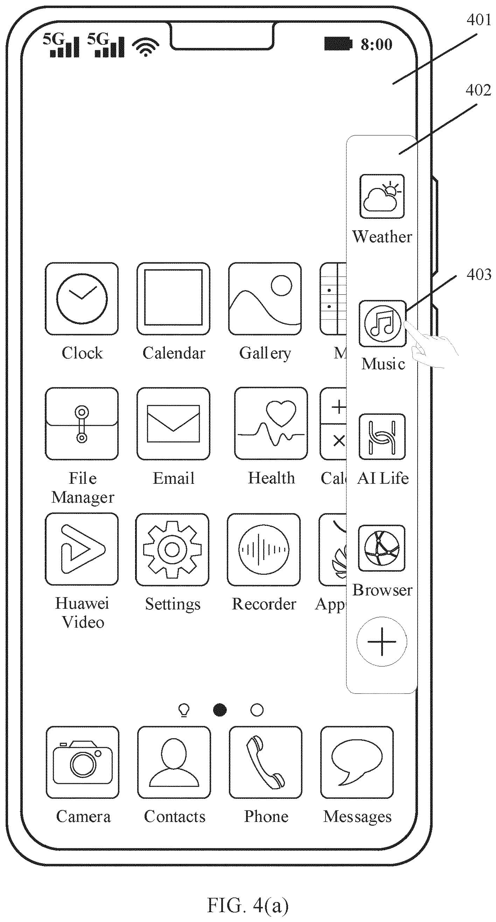

FIG. 4(a) to FIG. 4(f) show a group of GUIs according to an embodiment of this application.

As shown in FIG. 4(a), a first electronic device displays a dock bar 402 on an interface 401, where the dock bar 402 may include one or more application icons.

For example, the first electronic device may display the dock bar 402 in response to a leftward slide operation performed on a right edge of the interface 401 by a user, where the dock bar 402 is located on a right side of the interface 401.

It should be understood that an example in which the first electronic device displays the dock bar in response to the leftward slide operation performed on an interface edge by the user is used in this embodiment of this application. However, this is not limited in this embodiment of this application. For example, the first electronic device may display the dock bar in response to a rightward slide operation performed on a left edge of the interface by the user, where the dock bar is located on a left side of the interface.

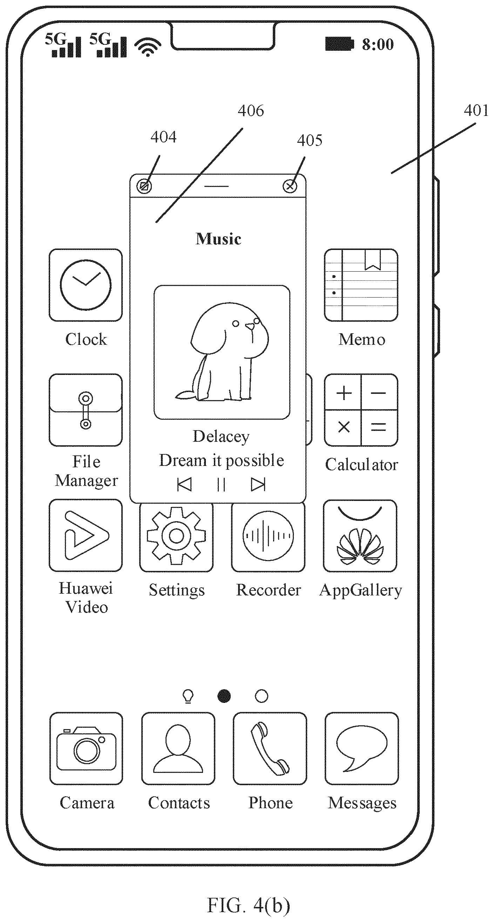

As shown in FIG. 4(a) and FIG. 4(b), the first electronic device detects an operation of tapping an application icon in the dock bar 402 by the user, and may display an application interface in response to the operation.

For example, as shown in FIG. 4(a) and FIG. 4(b), the first electronic device displays an interface 406 of a music application in a display area of the interface 401 in a form of a floating window in response to an operation of tapping a music application icon 403 by the user.

It should be noted that, in this embodiment of this application, an application interface may alternatively be displayed in another manner. For specific content, refer to the description below.

Optionally, the interface 406 may include a zoom-in control 404 and a close control 405. For descriptions of the zoom-in control 404 and the close control 405, refer to the foregoing descriptions. Details are not described herein.

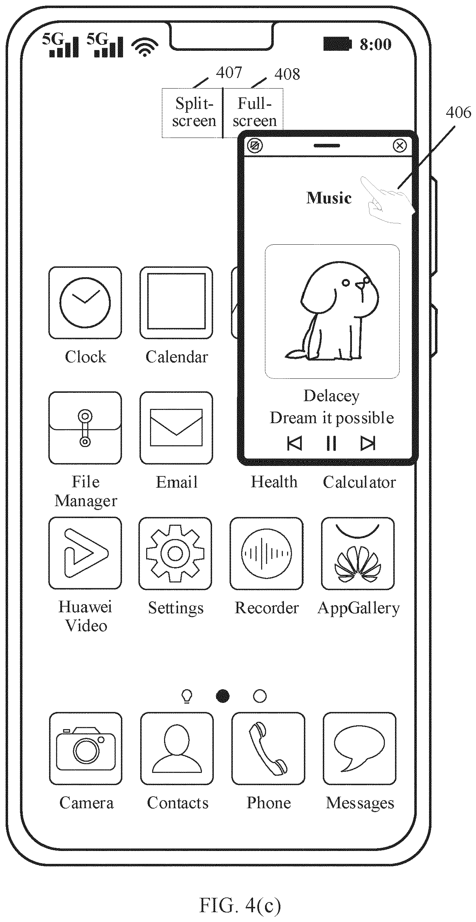

As shown in FIG. 4(c), the first electronic device detects a first gesture operation of the user, and displays a split-screen control 407 and a full-screen control 408 in response to the first gesture operation.

For example, first gesture operations may be that a single finger of the user long presses an interface for a time period longer than a first threshold, and/or that a plurality of fingers of the user long press an interface for a time period longer than a second threshold, and/or a pressure pressing operation of the user (a pressing force is greater than or equal to a third threshold), and/or a mid-air gesture of the user, and/or that a plurality of fingers of the user pinch and then spread on an interface, and/or that a single finger of the user slides (or a plurality of fingers of the user slide) on an interface based on a preset gesture.

It should be understood that the mid-air gesture is a gesture, a movement of a hand, or the like that is performed by the user at a specific distance from a screen of the first electronic device without a hand touch on the screen of the first electronic device. The specific distance between the hand of the user and the screen of the electronic device herein may be a preset distance, and the distance is determined based on a camera, a sensor, or the like that collects a mid-air gesture.

It should be understood that the first threshold and the second threshold may be the same or may be different.

It should be noted that display positions of the split-screen control 407 and the full-screen control 408 are not limited in this embodiment of this application. In an embodiment, the split-screen control 407 and the full-screen control 408 may be displayed on the interface 401.

In another embodiment, the split-screen control 407 and the full-screen control 408 may be displayed on the interface 406.

Optionally, in order to highlight di splay effect, when the first electronic device responds to the first gesture operation of the user, the first electronic device may display, in a highlighted manner, an interface operated by the user. Highlighted display may be understood as displaying a boundary of an interface in a highlighted manner or displaying an entire interface in a highlighted manner. For example, as shown in FIG. 4(c), the first electronic device displays a boundary of the interface 406 in a highlighted manner in response to a case in which a single finger of the user long presses the interface 406 for a time period longer than the first threshold.

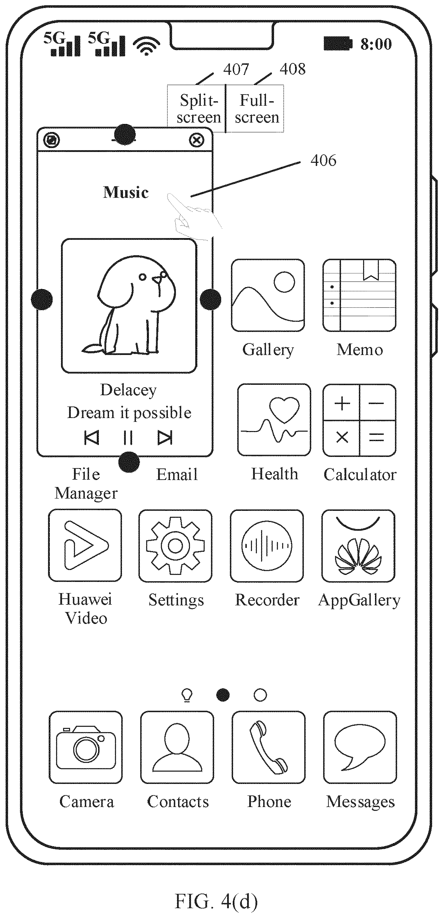

Optionally, in order to highlight display effect, when the first electronic device responds to the first gesture operation of the user, the first electronic device may display, in a focused manner, an interface operated by the user. Focused display may be understood as adding a focus to a boundary of the interface. For example, as shown in FIG. 4(d), the first electronic device adds a focus to each of four edges of the interface 406 in response to a case in which a single finger of the user long presses the interface 406 for a time period longer than the first threshold.

Optionally, in order to facilitate a user operation, when the first electronic device responds to the first gesture operation of the user, the first electronic device may scale down, based on a specific proportion, an interface operated by the user. This facilitates a further operation of the user.

As shown in FIG. 4(c) to FIG. 4(f), the first electronic device detects an operation of selecting the split-screen control 407 or the full-screen control 408 by the user, and the first electronic device performs a function corresponding to the control in response to the operation.

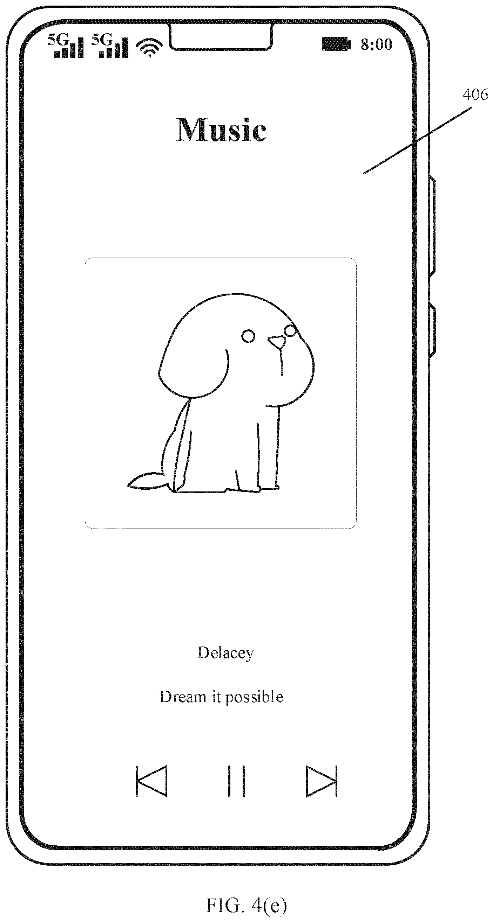

For example, the operation of selecting the split-screen control 407 or the full-screen control 408 by the user may be: the user drags the interface 406 to above the split-screen control 407 or the full-screen control 408; or may be: after the user performs the first gesture operation, the first electronic device keeps displaying the split-screen control 407 and the full-screen control 408 for a time period, and the user taps the split-screen control 407 or the full-screen control 408 within the time period. For example, as shown in FIG. 4(c) and FIG. 4(e), the first electronic device may display the interface 406 in full screen in response to an operation of dragging the interface 406 to above the full-screen control 408 by the user.

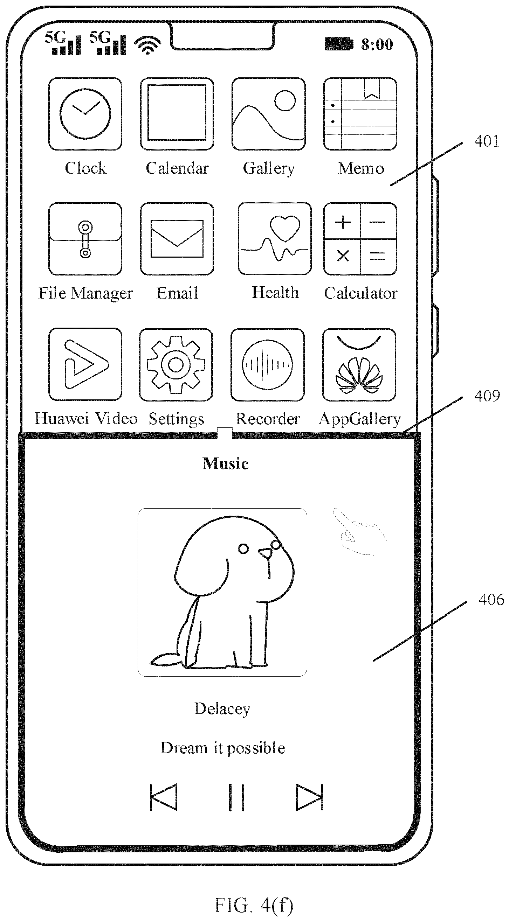

For another example, as shown in FIG. 4(d) and FIG. 4(f), the first electronic device may display the interface 401 and the interface 406 on a split screen in response to an operation of dragging the interface 406 to above the split-screen control 407 by the user.

It should be noted that, in the foregoing embodiment, an example in which the first gesture operation and a control selection operation are one continuous operation is used for description. It may be understood that the first gesture operation and the control selection operation may alternatively be two discontinuous operations.

Optionally, the user may drag a boundary 409 to adjust sizes of the interface 401 and the interface 406.

Optionally, when the first electronic device displays an interface on a split screen or in full screen, the first electronic device may display, in a highlighted manner or a focused manner, an interface recently operated by the user. For example, as shown in FIG. 4(d) and FIG. 4(f), in response to an operation of dragging the interface 406 above to the split-screen control 407 by the user, the first electronic device may display the interface 401 and display, in a highlighted manner (or in a focused manner), the interface 406.

For another example, as shown in FIG. 4(c) and FIG. 4(e), the first electronic device may display, in a highlighted manner (or in a focused manner), the interface 406 in response to an operation of dragging the interface 406 to above the full-screen control 408 by the user.

It should be noted that an example in which the first electronic device displays the interface 401 in full screen is used in this embodiment of this application. However, this is not limited in this embodiment of this application. The first electronic device may alternatively display the interface 401 on a split screen to perform the method in this embodiment of this application. For example, the first electronic device displays the interface 401 and another interface on a split screen, and displays the interface 406 in a form of a floating window. When detecting that the first gesture operation is performed on the floating window by the user and that the full-screen control is selected, the first electronic device displays the interface 406 in full screen. When detecting that the first gesture operation is performed on the floating window by the user and that the split-screen control is selected, the first electronic device may display the foregoing three interfaces on a split screen, or display the interface 401 and the interface 406 on a split screen, or display the interface 406 and the another interface on a split screen.

In this embodiment of this application, the first electronic device may display a plurality of interfaces, and may display a plurality of controls in response to the first gesture operation of the user. The user may select different controls to implement full-screen display or split-screen display of an interface. This improves user experience, makes human-computer interaction more interesting, and enriches operation manners.

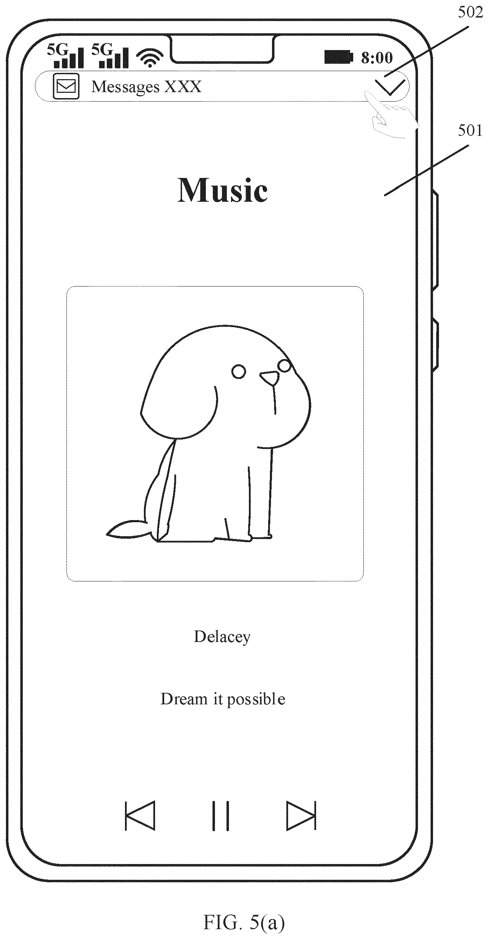

FIG. 5(a) to FIG. 5(e) show another group of GUIs according to an embodiment of this application.

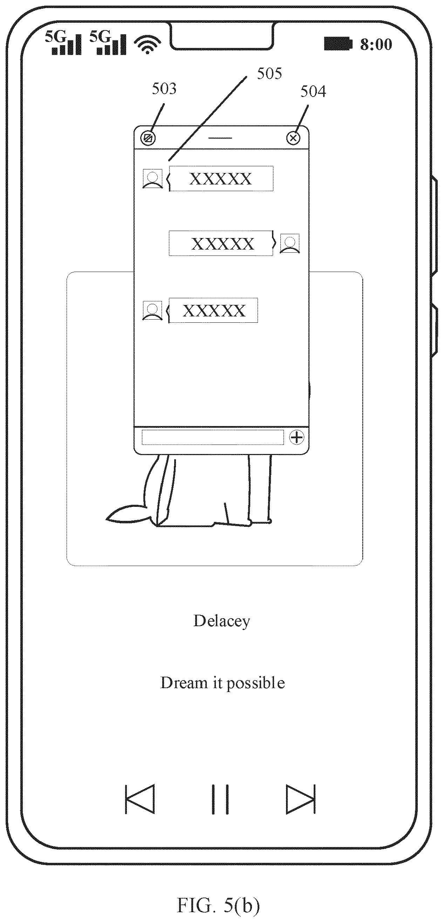

As shown in FIG. 5(a), a first electronic device displays an interface 501, and the interface 501 is an interface of a first application. When detecting a message pushed by a second application, the first electronic device may display a notification bar 502 in response to the pushed message. When detecting an operation of tapping the notification bar 502 by a user, the first electronic device may display, in response to the operation, a GUI shown in FIG. 5(b).

It should be noted that in FIG. 5(a), an example in which the user taps the notification bar 502 on the interface of the first application to enter a multi-interface mode is used. However, this is not limited. The user may further open a dock bar on the interface of the first application, and enter the multi-interface mode by tapping an application icon in the dock bar. For descriptions of opening the dock bar, refer to the foregoing embodiment, and details are not described herein.

As shown in FIG. 5(b), the first electronic device displays an interface 505 in a form of a floating window in a display area of the interface 501 in response to an operation performed on the notification bar 502 by the user, where the interface 505 is an interface of the second application.

Optionally, the interface 505 may include a zoom-in control 503 and a close control 504. For descriptions of the zoom-in control 503 and the close control 504, refer to the foregoing embodiment. Details are not described herein.

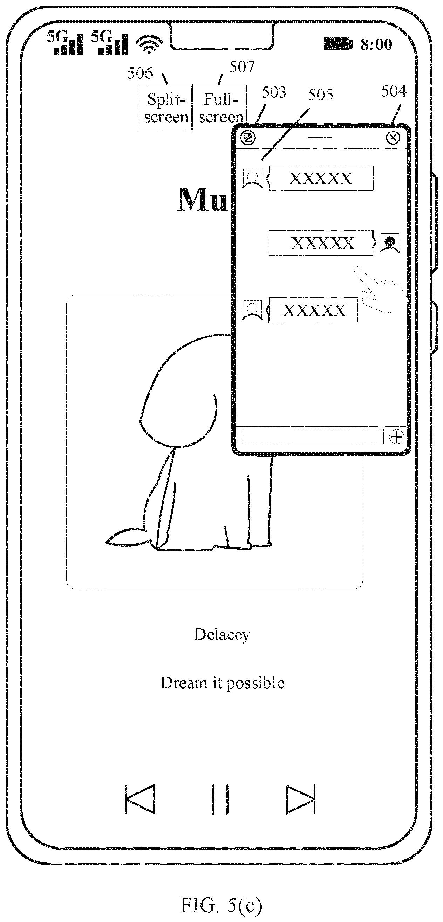

As shown in FIG. 5(c), the first electronic device detects a first gesture operation of the user, and displays a split-screen control 506 and a full-screen control 507 in response to the first gesture operation. For a description of the first gesture operation, refer to the foregoing embodiments. Details are not described herein.

Optionally, in order to highlight display effect, when the first electronic device responds to the first gesture operation of the user, the first electronic device may display, in a highlighted manner or a focused manner, an interface operated by the user.

Optionally, in order to facilitate a user operation, when the first electronic device responds to the first gesture operation of the user, the first electronic device may scale down, based on a specific proportion, an interface operated by the user. This facilitates a further operation of the user.

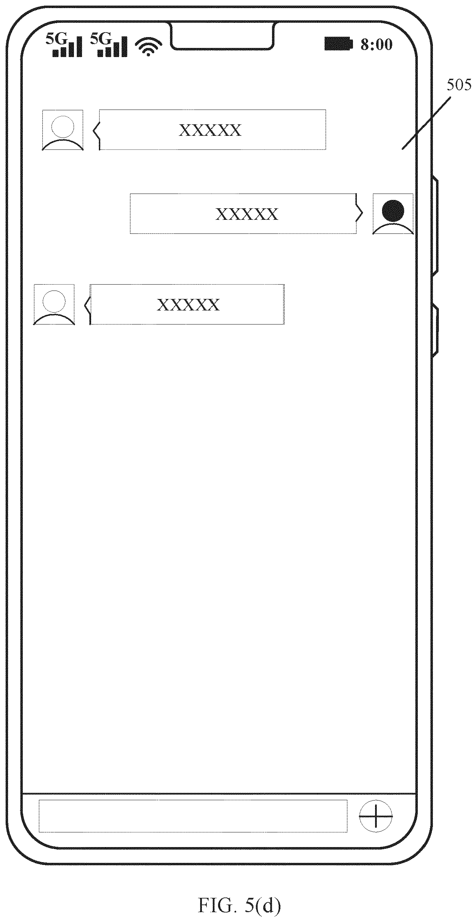

As shown in FIG. 5(c) and FIG. 5(d), the first electronic device detects an operation of selecting the full-screen control 507 by the user, and the first electronic device displays the interface 505 in full screen in response to the operation.

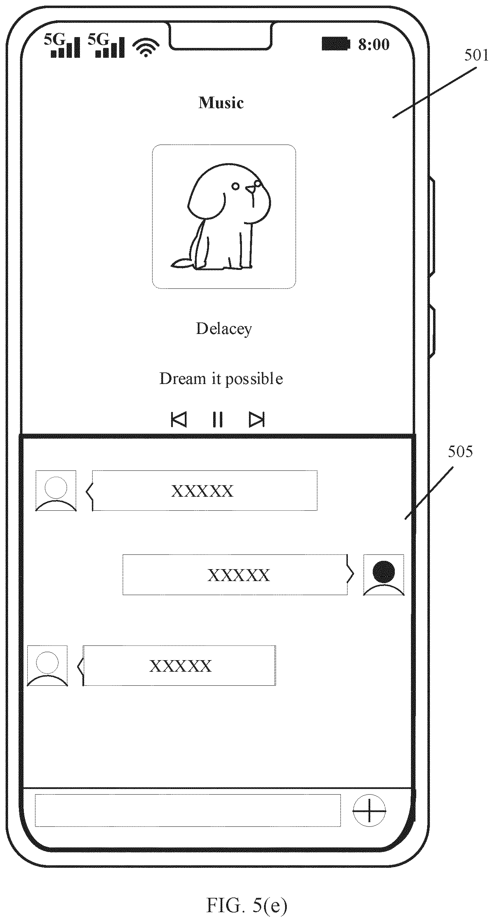

In another embodiment, as shown in FIG. 5(e), the first electronic device detects an operation of selecting the split-screen control by the user, and the first electronic device may display the interface 501 and the interface 505 on a split screen in response to the operation.

Optionally, the user may drag a boundary 508 to adjust sizes of the interface 501 and the interface 505.

Optionally, when the first electronic device displays an interface on a split screen or in full screen, the first electronic device may display, in a highlighted manner or a focused manner, an interface recently operated by the user. For specific descriptions, refer to the foregoing embodiments. Details are not described herein.

In this embodiment of this application, the first electronic device simultaneously displays interfaces of a plurality of applications, and may display a plurality of controls in response to the first gesture operation of the user. The user may select different controls to implement full-screen display or split-screen display of an interface. This improves user experience, makes human-computer interaction more interesting, and enriches operation manners.

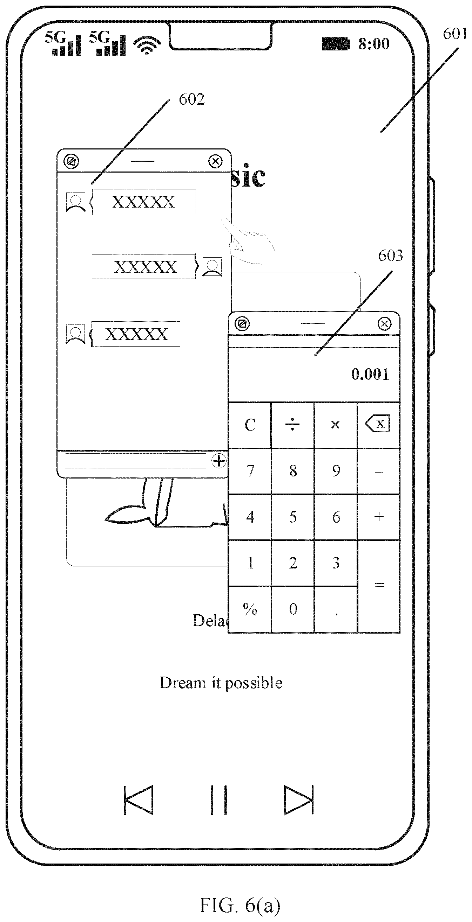

FIG. 6(a) to FIG. 6(c) show another group of GUIs according to an embodiment of this application.

As shown in FIG. 6(a), a first electronic device displays a plurality of interfaces, such as an interface 601, an interface 602, and an interface 603. The interface 601 is an interface of a first application, the interface 602 is an interface of a second application, and the interface 603 is an interface of a third application. The first electronic device displays the interface 602 and the interface 603 in a display area of the interface 601 in a form of a floating window. For a description of entering a plurality of interfaces, refer to the foregoing embodiments, and details are not described herein.

It should be understood that in this embodiment of this application, an example in which the first electronic device displays interfaces of three applications is used. However, this is not limited. Alternatively, the first electronic device may simultaneously display more than three interfaces, and the interfaces may include system interfaces and application interfaces. The system interface may be understood as an interface of an operating system of the first electronic device, for example, a desktop, a control center, or a leftmost screen.

Optionally, the interface 602 and the interface 603 each may include a zoom-in control and a close control. For descriptions of the zoom-in control and the close control, refer to the foregoing embodiments. Details are not described herein.

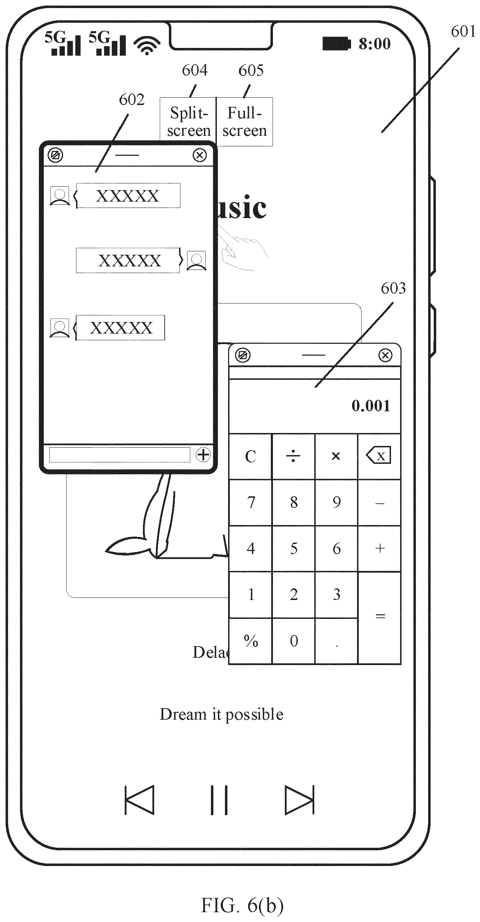

As shown in FIG. 6(b), the first electronic device detects a first gesture operation of a user, and displays a split-screen control 604 and a full-screen control 605 in response to the first gesture operation. For a description of the first gesture operation, refer to the foregoing embodiments. Details are not described herein.

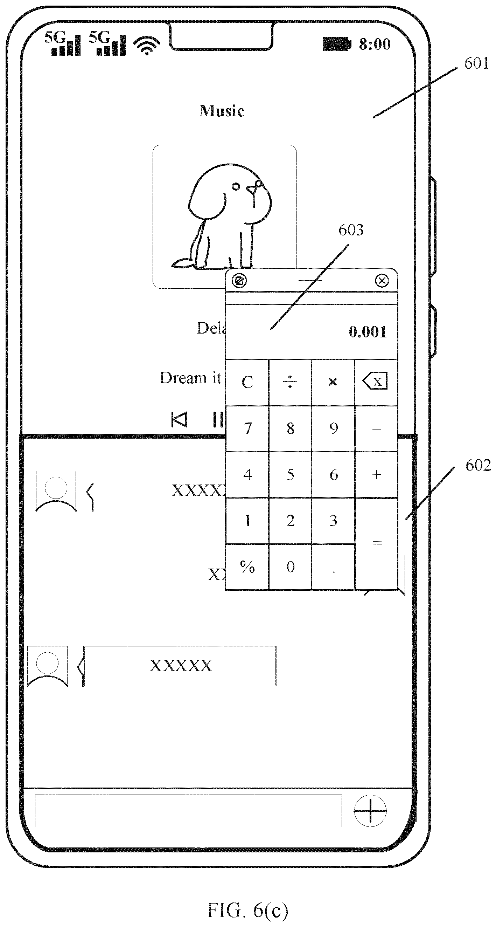

As shown in FIG. 6(b) and FIG. 6(c), the first electronic device detects an operation of selecting the split-screen control 603 by the user; and in response to the operation, the first electronic device may display the interface 601 and the interface 602 on a split screen, and may further display the interface 603 in display areas of the interface 601 and the interface 602.

Optionally, the user may adjust sizes of the interface 601, the interface 602, and the interface 603 by dragging a boundary 604 and a boundary 605.

Optionally, when the first electronic device displays an interface on a split screen or in full screen, the first electronic device may display, in a highlighted manner or a focused manner, an interface recently operated by the user. For specific descriptions, refer to the foregoing embodiments. Details are not described herein.

In this embodiment of this application, the first electronic device may simultaneously display a plurality of interfaces, and may display a plurality of controls by detecting the first gesture operation of the user. The user may select different controls to implement full-screen display or split-screen display of an interface. This improves user experience, makes human-computer interaction more interesting, and enriches operation manners.

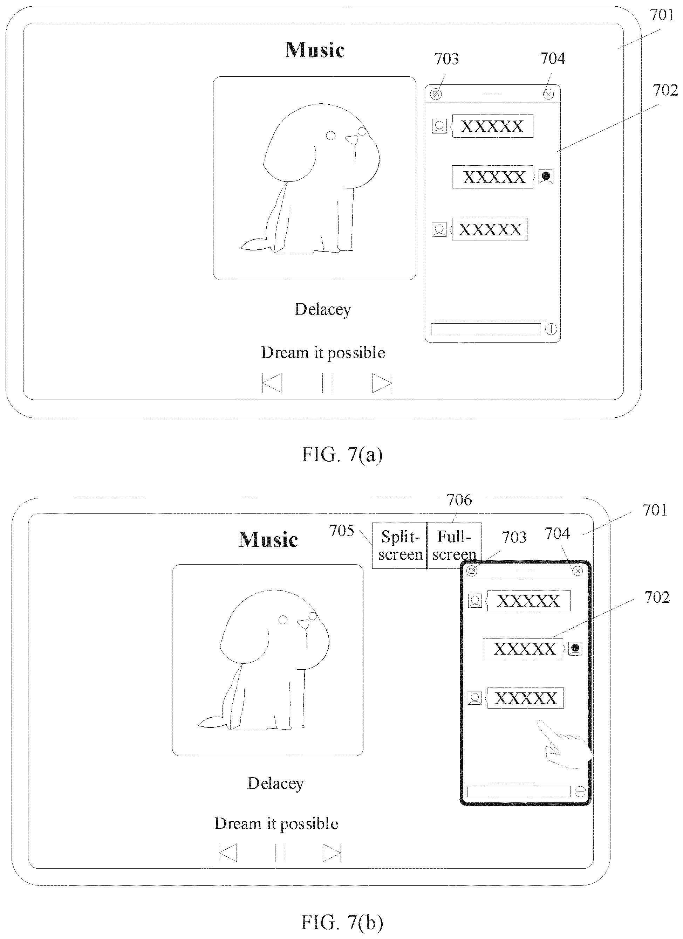

FIG. 7(a) to FIG. 7(d) show another group of GUIs according to an embodiment of this application.

As shown in FIG. 7(a), a first electronic device and a second electronic device are connected to implement multi-screen collaboration. A first application is installed in the first electronic device, and a second application is installed in the second electronic device. When multi-screen collaboration is implemented between the first electronic device and the second electronic device, the first electronic device may simultaneously display an interface 701 and an interface 702. The interface 701 is an interface of the first application, and the interface 702 is an interface of the second application. The interface 702 may also be referred to as a collaboration interface. The first electronic device displays the interface 702 in a form of a floating window in a display area of the interface 701.

For example, a connection between the first electronic device and the second electronic device may be a wireless connection (for example, through Wi-Fi or Bluetooth) or a wired connection. This is not limited in this embodiment of this application.

In another embodiment, the interface 701 may alternatively be a system interface of the first electronic device, and the interface 702 may alternatively be a system interface of the second electronic device.

Optionally, the interface 702 may further include a zoom-in control 703 and a close control 704. For descriptions of the zoom-in control 703 and the close control 704, refer to the foregoing embodiments. Details are not described herein.

As shown in FIG. 7(b), the first electronic device detects a first gesture operation of the user, and displays a split-screen control 705 and a full-screen control 706 in response to the first gesture operation. For a description of the first gesture operation, refer to the foregoing embodiments. Details are not described herein.

Optionally, in order to highlight display effect, when the electronic device responds to the first gesture operation of the user, the electronic device may display, in a highlighted manner or a focused manner, an interface operated by the user. For descriptions of displaying an interface in a highlighted manner and displaying an interface in a focused manner, refer to the foregoing embodiments. Details are not described herein.

Optionally, in order to facilitate a user operation, when the electronic device responds to the first gesture operation of the user, the electronic device may scale down, based on a specific proportion, an interface operated by the user. This facilitates a further operation of the user.

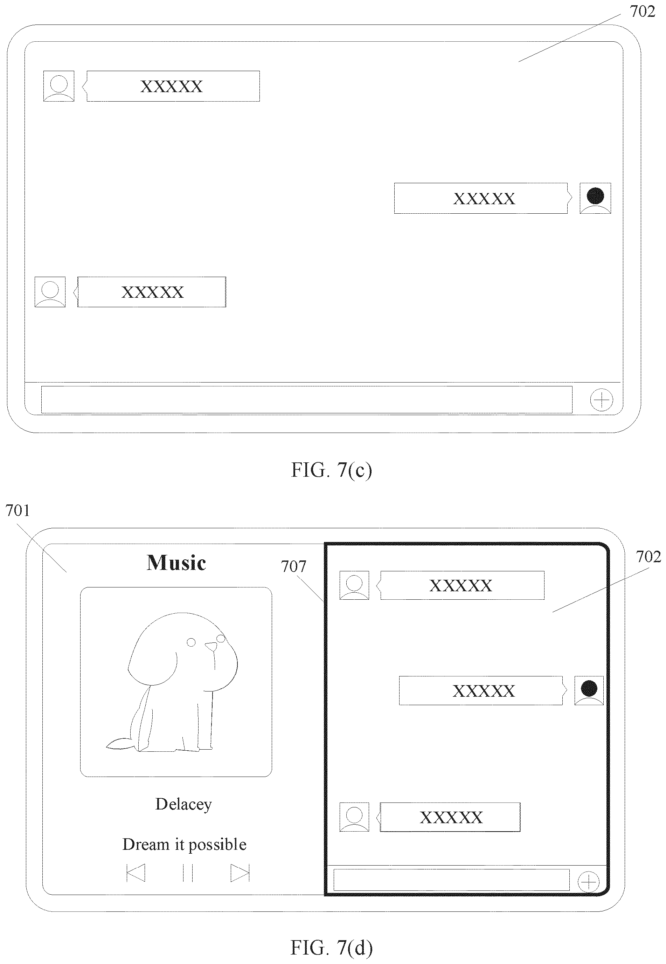

As shown in FIG. 7(b) and FIG. 7(c), the first electronic device detects an operation of selecting the full-screen control 706 by the user, and the first electronic device displays the interface 702 in full screen in response to the operation.

In another embodiment, as shown in FIG. 7(d), the first electronic device detects an operation of selecting the split-screen control 705 by the user, and the first electronic device displays the interface 701 and the interface 702 on a split screen in response to the operation.

Optionally, the user may drag a boundary 707 to adjust sizes of the interface 701 and the interface 702.

Optionally, when displaying an interface on a split screen or in full screen, the electronic device may display, in a highlighted manner or a focused manner, an interface recently operated by the user.

In this embodiment of this application, the first electronic device and the second electronic device are connected to implement multi-screen collaboration. The first electronic device may display a plurality of controls by detecting the first gesture operation of the user. The user may select different controls to implement full-screen display or split-screen display of an interface. This improves user experience, makes human-computer interaction more interesting, and enriches operation manners.

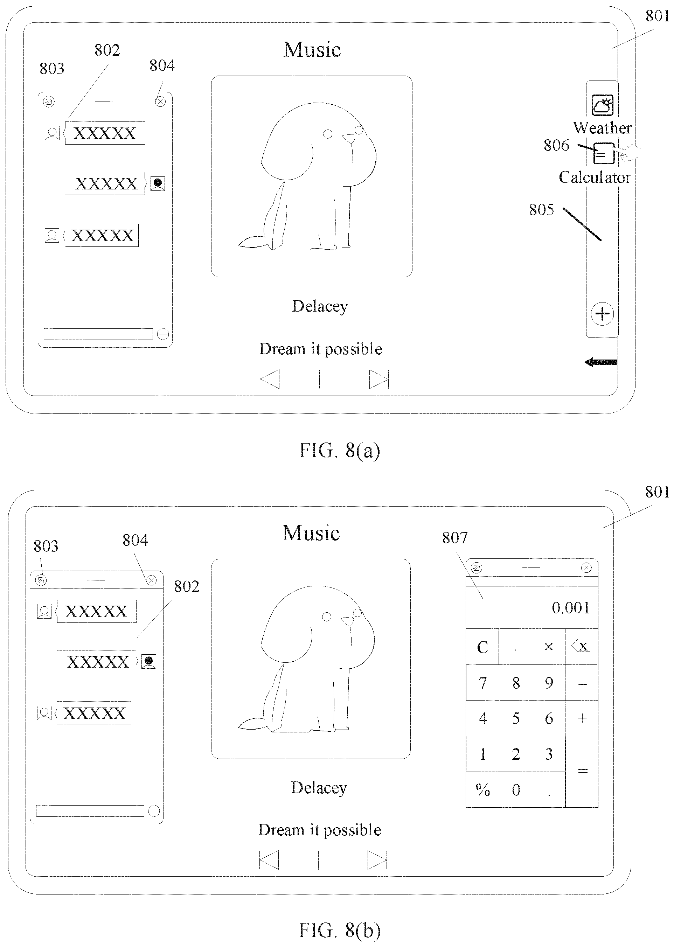

FIG. 8(a) to FIG. 8(d) show another group of GUIs according to an embodiment of this application.

As shown in FIG. 8(a), a first electronic device and a second electronic device are connected to implement multi-screen collaboration. A first application is installed in the first electronic device, and a second application is installed in the second electronic device. When multi-screen collaboration is implemented between the first electronic device and the second electronic device, the first electronic device may simultaneously display an interface 801 and an interface 802. The interface 801 is an interface of the first application, and the interface 802 is an interface of the second application. The interface 802 may also be referred to as a collaboration interface.

For example, a connection between the first electronic device and the second electronic device may be a wireless connection (for example, through Wi-Fi or Bluetooth) or a wired connection. This is not limited in this embodiment of this application.

In another embodiment, the interface 801 may alternatively be a system interface of the first electronic device, and the interface 802 may alternatively be a system interface of the second electronic device.

As shown in FIG. 8(a), the first electronic device displays a dock bar 805 on the interface 801, where the dock bar 805 may include one or more application icons.

For example, the first electronic device may display the dock bar 805 in response to a leftward slide operation performed on a right edge of the interface 801 by a user, where the dock bar 805 is located on a right side of the interface 801.

As shown in FIG. 8(a) and FIG. 8(b), the first electronic device detects an operation of tapping an application icon in the dock bar 805 by the user, and may display an application interface in response to the operation.

For example, as shown in FIG. 8(a) and FIG. 8(b), the first electronic device displays, in a form of a floating window in response to an operation of tapping a calculator application icon 806 by the user, an interface 807 of a calculator application in a display area of the interface 801.

In another embodiment, the interface 807 may alternatively be the system interface of the first electronic device.

It should be understood that the calculator application is an application in the first electronic device.

It should be noted that an application interface may alternatively be displayed in another manner in this embodiment of this application. For details, refer to the foregoing embodiments. Details are not described herein again.

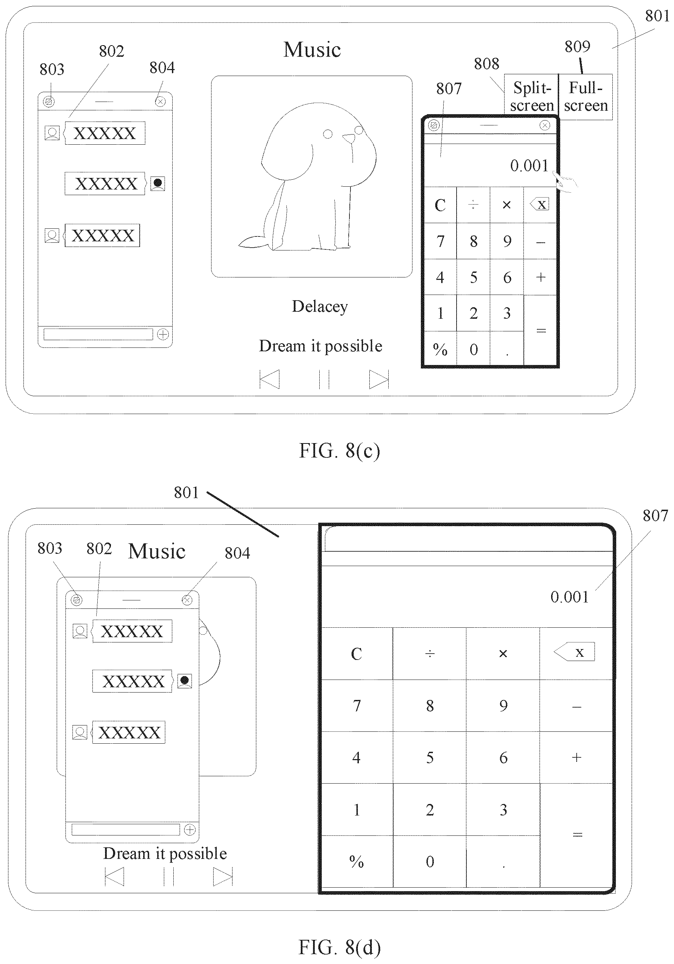

As shown in FIG. 8(c), the first electronic device detects a first gesture operation of the user, and displays a split-screen control 808 and a full-screen control 809 in response to the first gesture operation. For the first gesture operation, refer to the foregoing embodiments, and details are not described herein.

Optionally, in order to highlight display effect, when the first electronic device responds to the first gesture operation of the user, the first electronic device may display, in a highlighted manner or a focused manner, an interface operated by the user.

Optionally, in order to facilitate a user operation, when the first electronic device responds to the first gesture operation of the user, the first electronic device may scale down, based on a specific proportion, an interface operated by the user. This facilitates a further operation of the user.

As shown in FIG. 8(c) and FIG. 8(d), the first electronic device detects an operation of selecting the split-screen control 808 by the user; and in response to the operation, the first electronic device may display the interface 801 and the interface 807 on a split screen, and may further display the interface 802 in display areas of the interface 801 and the interface 807.

In another embodiment, the first electronic device detects an operation of selecting the full-screen control 909 by the user, and the first electronic device may display the interface 907 in full screen in response to the operation.

In this embodiment of this application, the first electronic device and the second electronic device are connected to implement multi-screen collaboration. The first electronic device may simultaneously display a collaboration interface and interfaces of a plurality of applications in the first electronic device. In addition, the first electronic device may display different interfaces in full screen or on a split screen based on the first gesture operation of the user. This improves user experience, makes human-computer interaction more interesting, and enriches operation manners.

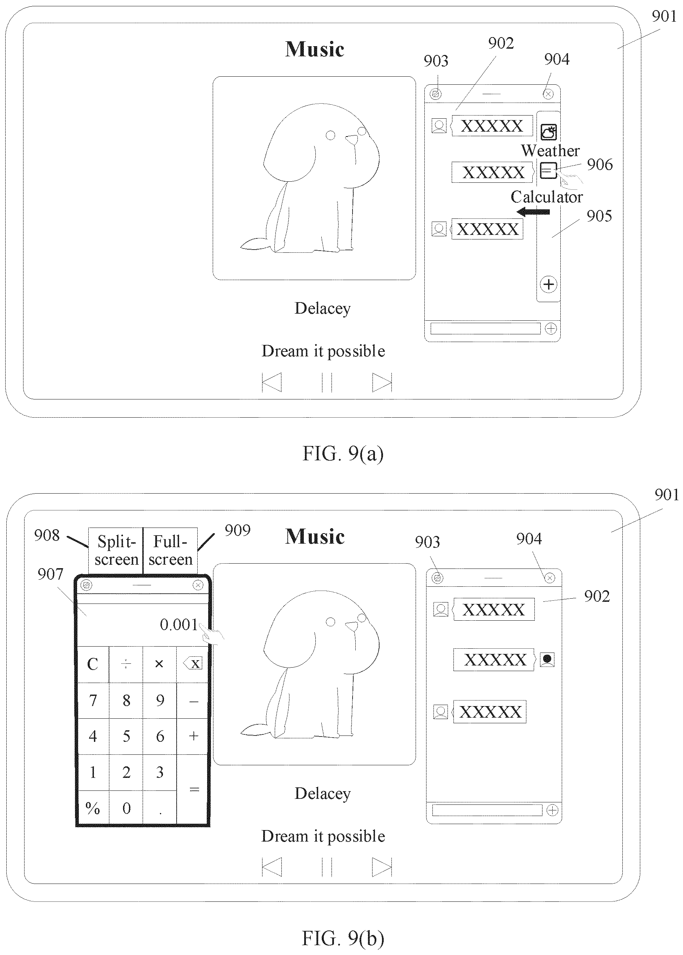

FIG. 9(a) to FIG. 9(d) show another group of GUIs according to an embodiment of this application.

As shown in FIG. 9(a), a first electronic device and a second electronic device are connected to implement multi-screen collaboration. A first application is installed in the first electronic device, and a second application is installed in the second electronic device. When multi-screen collaboration is implemented between the first electronic device and the second electronic device, the first electronic device may simultaneously display an interface 901 and an interface 902. The interface 901 is an interface of the first application, and the interface 902 is an interface of the second application. The interface 902 may also be referred to as a collaboration interface.

In another embodiment, the interface 901 may alternatively be a system interface of the first electronic device, and the interface 902 may alternatively be a system interface of the second electronic device.

As shown in FIG. 9(a), the first electronic device detects an operation of opening a dock bar on the interface 902 by a user, and displays the dock bar 905 in response to the operation.

It should be understood that the dock bar 905 is a dock bar on the second electronic device.

As shown in FIG. 9(a) and FIG. 9(b), the first electronic device detects an operation of tapping an application icon by the user; and in response to the operation, the first electronic device displays, in a form of a floating window in a display area of the interface 901, an interface of an application selected by the user.

For example, as shown in FIG. 9(a) and FIG. 9(b), the first electronic device displays an interface 907 in a form of a floating window in response to an operation of tapping a calculator application icon 906 by the user, where the interface 907 is an interface of a calculator application. The interface 907 may also be referred to as a collaboration interface.

It should be understood that the interface 907 is an interface of the calculator application in the second electronic device.

It should be noted that an application interface may alternatively be displayed in another manner in this embodiment of this application. For details, refer to the foregoing embodiments. Details are not described herein again.

As shown in FIG. 9(b), the first electronic device detects a first gesture operation of the user, and displays a split-screen control 908 and a full-screen control 909 in response to the first gesture operation. For the first gesture operation, refer to the foregoing embodiments, and details are not described herein.

Optionally, in order to highlight display effect, when the first electronic device responds to the first gesture operation of the user, the first electronic device may display, in a highlighted manner or a focused manner, an interface operated by the user.

Optionally, in order to facilitate a user operation, when the first electronic device responds to the first gesture operation of the user, the first electronic device may scale down, based on a specific proportion, an interface operated by the user. This facilitates a further operation of the user.

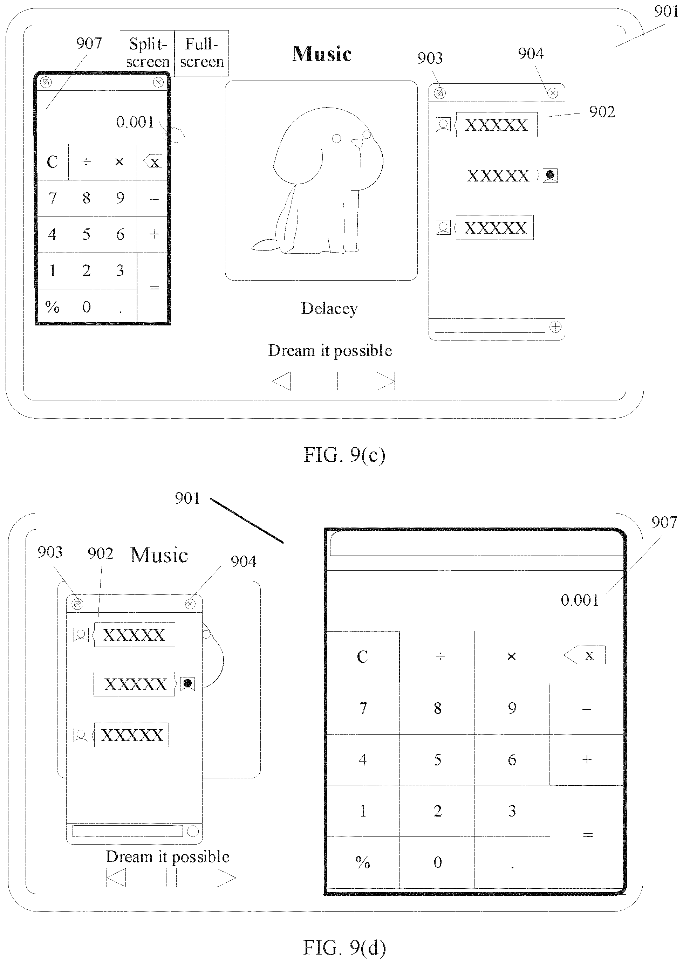

As shown in FIG. 9(c) and FIG. 9(d), the first electronic device detects an operation of selecting the split-screen control 908 by the user; and in response to the operation, the first electronic device may display the interface 901 and the interface 907 on a split screen, and display the interface 902 in display areas of the interface 901 and the interface 907.

In another embodiment, the first electronic device detects an operation of selecting the full-screen control 909 by the user, and the first electronic device may display the interface 907 in full screen in response to the operation.

In this embodiment of this application, the first electronic device and the second electronic device are connected to implement multi-screen collaboration. The first electronic device may simultaneously display a plurality of collaboration interfaces. The first electronic device displays a plurality of controls in response to the first gesture operation of the user. The user may select different controls to implement full-screen display or split-screen display of an interface of the first electronic device and the collaboration interface. This improves user experience, makes human-computer interaction more interesting, and enriches operation manners.

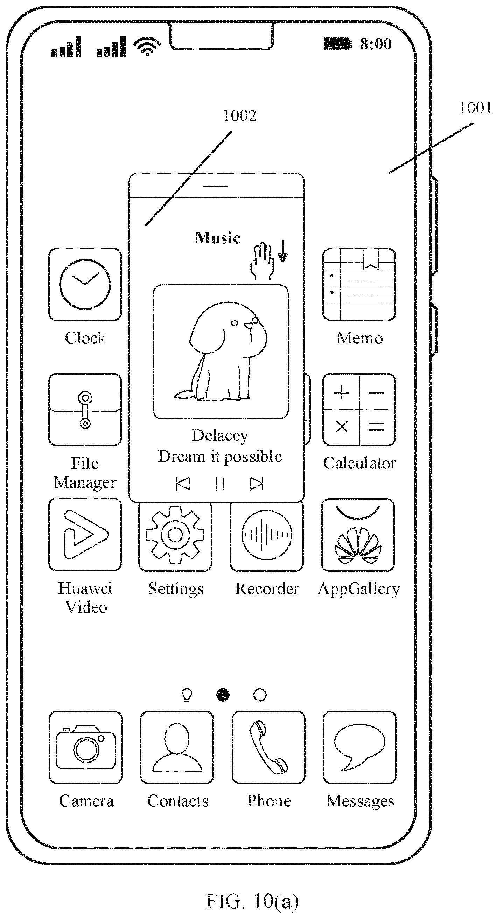

With reference to FIG. 4(a) to FIG. 9(d), the foregoing describes a case in which in embodiments of this application, the first electronic device may display a split-screen control and a full-screen control after detecting a first gesture operation of the user, and the first electronic device may display an interface on a split screen or in full screen based on different controls selected by the user. With reference to FIG. 10(a) to FIG. 10(c), the following describes a method used by a first electronic device to display an interface on a split screen or in full screen when no split-screen control nor full-screen control is displayed.

FIG. 10(a) to FIG. 10(c) show a group of GUIs according to an embodiment of this application.

As shown in FIG. 10(a), a first electronic device displays an interface 1001 and displays, in a form of a floating window, an interface 1002. For descriptions of the interface 1001 and the interface 1002, refer to the foregoing embodiments. Details are not described herein.

As shown in FIG. 10(a) to FIG. 10(c), the first electronic device detects an operation gesture, and the first electronic device may display the interface 1002 in full screen, or the first electronic device may display the interface 1001 and the interface 1002 on a split screen.

For example, the operation gesture may be that a plurality of fingers slide in a preset direction.

It should be noted that the operation gesture may alternatively be a mid-air gesture.

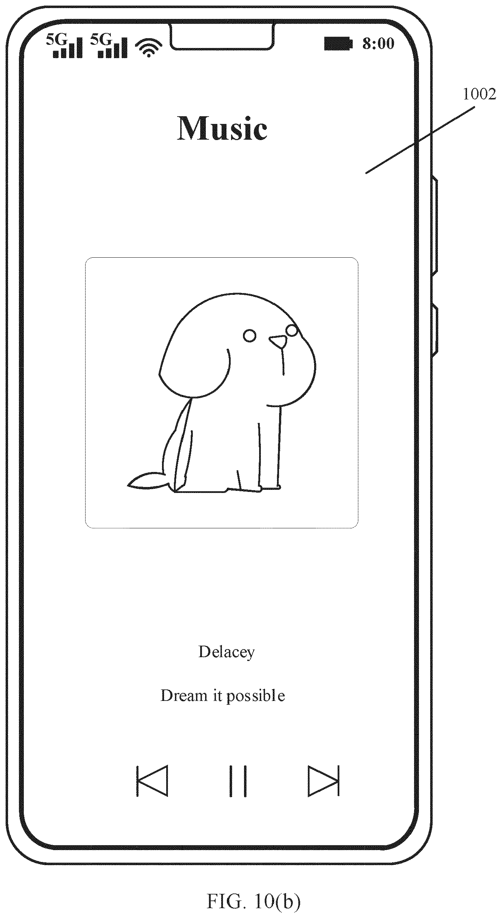

In an embodiment, the first electronic device may receive an operation that is performed by a user for setting an operation gesture, and the user may associate the operation gesture with a full-screen display manner. In this case, when the first electronic device detects the operation gesture, the first electronic device may display an interface in full screen. For example, as shown in FIG. 10(a) and FIG. 10(b), the first electronic device displays the interface 1002 in full screen in response to the detected operation gesture.

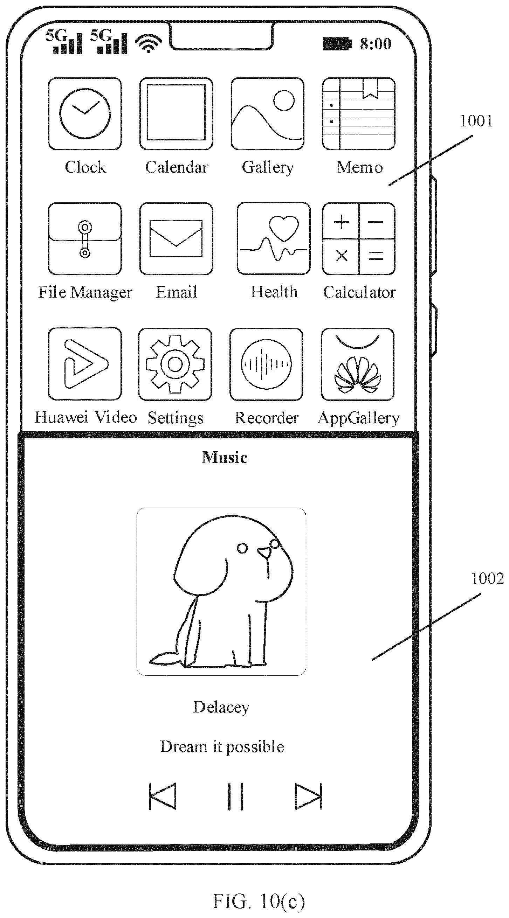

In another embodiment, the first electronic device may receive an operation that is performed by a user for setting an operation gesture, and the user may associate the operation gesture with a split-screen display manner. In this case, when the first electronic device detects the operation gesture, the first electronic device may display an interface on a split screen. For example, as shown in FIG. 10(a) and FIG. 10(c), the first electronic device displays the interface 1001 and the interface 1002 on a split screen in response to the detected operation gesture.

Alternatively, the first electronic device may further associate, through a system presetting, the operation gesture with either the full-screen display manner or the split-screen display manner.

In this embodiment of this application, the first electronic device may simultaneously display a plurality of interfaces, and may implement full-screen display or split-screen display of the interface by detecting an operation gesture of the user. This improves user experience, makes human-computer interaction more interesting, and enriches operation manners.

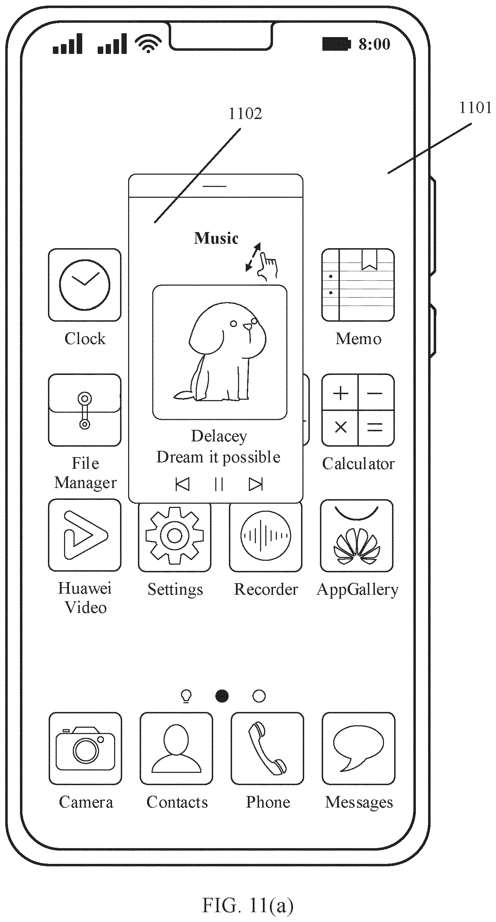

FIG. 11(a) to FIG. 11(d) show a group of GUIs according to an embodiment of this application.

As shown in FIG. 11(a), a first electronic device displays an interface 1101 and displays, in a form of a floating window, an interface 1102. For descriptions of the interface 1101 and the interface 1102, refer to the foregoing embodiments. Details are not described herein.

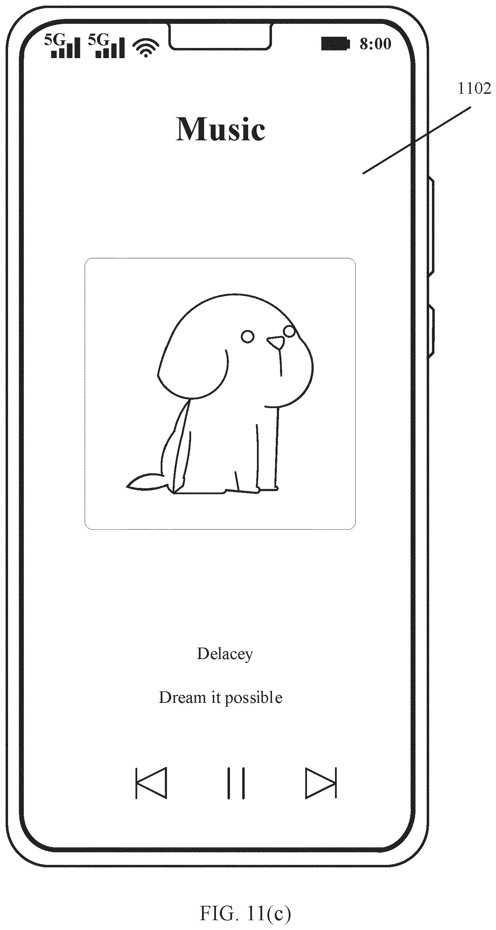

As shown in FIG. 11(a) and FIG. 11(c), the first electronic device detects a first gesture of a user, and the first electronic device displays the interface 1102 in full screen in response to the first gesture.

For example, the first gesture may be a zoom-in gesture of a finger. For example, as shown in FIG. 11(a), a thumb and an index finger slide in opposite directions.

It should be noted that the first gesture may alternatively be a mid-air gesture.

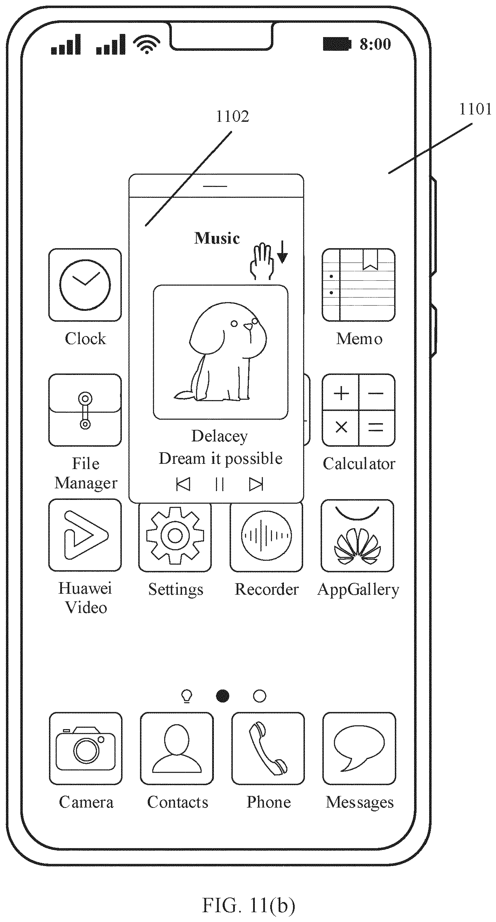

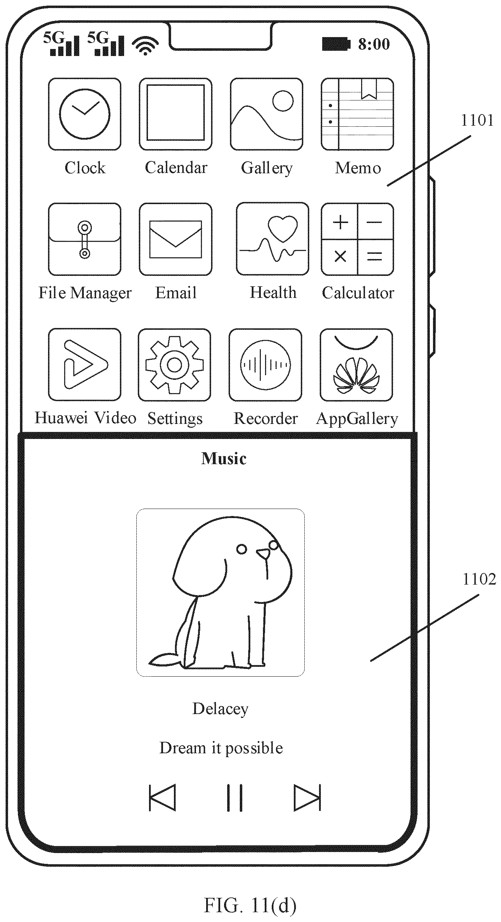

As shown in FIG. 11(b) and FIG. 11(d), the first electronic device detects a second gesture of the user, and the first electronic device displays the interface 1101 and the interface 1102 on a split screen in response to the second gesture.

For example, the second gesture may be that a plurality of fingers slide in a preset direction. For example, as shown in FIG. 11(b), three fingers slide downward. When the user slides downward, the first electronic device may display interfaces 1101 and 1102 on a split screen.

Optionally, the first electronic device may determine, based on a sliding direction indicated by the second gesture, a position of an interface when the interface is displayed on a split screen. For example, when the second gesture indicates a downward slide, an operated interface may be displayed on a split screen. When the interface is displayed on the split screen, the first electronic device may display the interface at a lower position on the split screen interface. For example, as shown in FIG. 11(b) and FIG. 11(d), three fingers slide downward. In response to a downward slide operation of the three fingers of the user, the first electronic device may display the interfaces 1101 and 1102 on a split screen, and display the interface 1102 below the interface 1101.

It should be noted that a third gesture operation may alternatively be a mid-air gesture.

It should be understood that the first gesture and the second gesture operation may be preset by a system or set by a user.

In this embodiment of this application, the first electronic device may simultaneously display a plurality of interfaces, and implement full-screen display or split-screen display of the interface by detecting different gestures of the user. This improves user experience, makes human-computer interaction more interesting, and enriches operation manners.

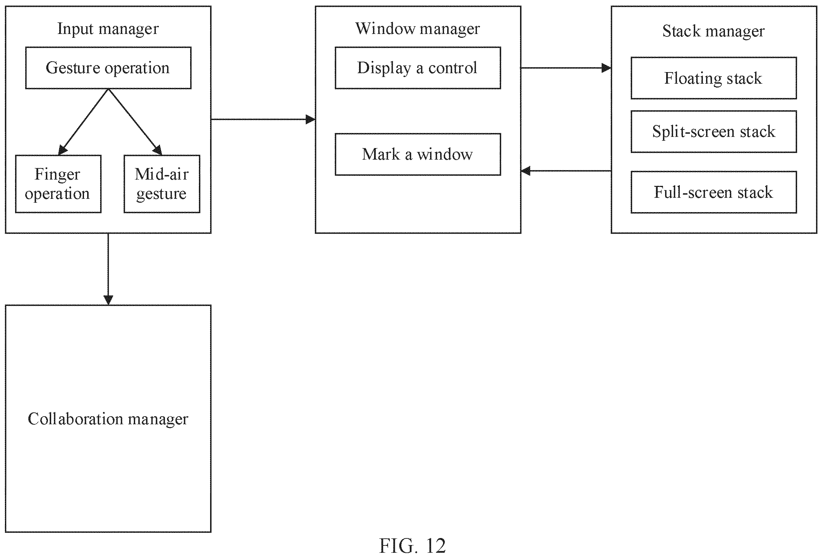

FIG. 12 is a schematic diagram of a data flow direction inside a system according to an embodiment of this application. An input manager may determine a first gesture operation of a user. For example, first gesture operations are that a single finger of the user long presses an interface for a time period longer than a first threshold, and/or that a plurality of fingers of the user long press an interface for a time period longer than a second threshold, and/or a pressure pressing operation of the user (a pressing force is greater than or equal to a third threshold), and/or a mid-air gesture of the user, and/or that a plurality of fingers of the user pinch and then spread on an interface, and/or that a single finger of the user slides (or a plurality of fingers of the user slide) on an interface based on a preset gesture. Then, the input manager may send the determined gesture operation of the user to a window manager, and the window manager performs a corresponding display policy. For example, as shown in FIG. 4(a) to FIG. 4(f), a first electronic device detects the first gesture operation of the user through a touch component or a camera, and the window manager performs a corresponding display policy to display a split-screen control and a full-screen control. Optionally, when the first gesture operation of the user is detected, the window manager may mark an interface operated by the user.

When the input manager detects that the user selects different controls, a stack manager may switch between different stacks. For example, as shown in FIG. 4(a) to FIG. 4(f), when the user selects the split-screen control, the stack manager may switch from a floating stack to a split-screen stack. When the user selects a full-screen stack, the stack manager may switch from the floating stack to the split-screen stack.

When there is a collaboration interface on the first electronic device, the input manager may send the detected first gesture operation to a collaboration manager, and the collaboration manager performs corresponding display and management. For example, as shown in FIG. 7(a) to FIG. 7(d), the first electronic device may display an interface of a second electronic device. When the first electronic device detects the first gesture operation, the collaboration manager displays and manages a collaboration window.

The foregoing embodiments may be used separately, or may be used in combination to implement different technical effects.

In the foregoing embodiments provided in this application, the method provided in embodiments of this application is described from a perspective of an electronic device serving as an execution body. To implement the functions in the method provided in the foregoing embodiments of this application, the electronic device may include a hardware structure and/or a software module, to implement the functions in a form of the hardware structure, the software module, or a combination of the hardware structure and the software module. Whether a specific function in the foregoing functions is performed by using the hardware structure, the software module, or the combination of the hardware structure and the software module depends on a specific application and a design constraint of the technical solutions.

An embodiment of this application further provides an electronic device, including a display, a processor, a memory, one or more sensors, a power button, an application, and a computer program. The foregoing components may be connected through one or more communication buses. One or more computer programs are stored in the foregoing memory and are configured to be executed by one or more processors. The one or more computer programs include instructions, and the instructions may be used to enable the electronic device to perform the steps of the interface display method in the foregoing embodiments.

For example, the processor may be specifically the processor 110 shown in FIG. 2, the memory may be specifically the internal memory 120 shown in FIG. 2 and/or an external memory connected to the electronic device, the display may be specifically the display 130 shown in FIG. 2, the sensor may be specifically one or more sensors in the sensor module 150 shown in FIG. 2, and the power button may be the power button 141 shown in FIG. 2. This is not limited in this embodiment of this application.

In addition, an embodiment of this application further provides a graphical user interface (graphical user interface, GUI) on an electronic device. The graphical user interface specifically includes a graphical user interface displayed when the electronic device performs the foregoing method embodiments.

According to the context, the term "when..." or "after..." used in the foregoing embodiments may be interpreted as a meaning of "if...", "after...", "in response to determining...", or "in response to detecting...". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of procedures or functions according to embodiments of the present invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid-State Disk (SSD)), or the like. In a case in which no conflict occurs, the solutions in the foregoing embodiments may be combined for use.

## Claims

1. A multi-interface display method, wherein the method is applied to a first electronic device, and the method comprises:
displaying, by the first electronic device, a first interface and displaying, in a floating window, a second interface;
detecting, by the first electronic device, a first gesture performed on the floating window by a user;
displaying, by the first electronic device, a first control and a second control in response to the first gesture; and
when the first control is selected, displaying, by the first electronic device, the second interface in full screen; or
when the second control is selected, displaying, by the first electronic device, the first interface and the second interface on a split screen.

2. The method according to claim 1, wherein before the displaying a second interface, the method further comprises:
establishing, by the first electronic device, a connection to a second electronic device; and
receiving, by the first electronic device, first content sent by the second electronic device, wherein
the second interface is a display interface corresponding to the first content.

3. The method according to claim 1 or 2, wherein the displaying, by the first electronic device, a first control and a second control in response to the first gesture comprises:
displaying, by the first electronic device, the first control and the second control on the first interface.

4. The method according to claim 1 or 2, wherein the displaying, by the first electronic device, a first control and a second control in response to the first gesture comprises:
displaying, by the first electronic device, the first control and the second control on the second interface.

5. The method according to any one of claims 1 to 4, wherein the first interface is a full-screen interface or the first interface is an interface displayed on a split screen with a third interface.

6. The method according to any one of claims 1 to 5, wherein the method further comprises:
highlighting, by the first electronic device, the second interface in response to the detected first gesture.

7. The method according to claim 3, wherein the method further comprises:
scaling down, by the first electronic device, the floating window in response to the detected first gesture.

8. The method according to any one of claims 1 to 7, wherein the first gesture is a touch gesture or a mid-air gesture.

9. The method according to claim 8, wherein the touch gesture comprises a slide of a finger of the user in a preset direction, or a long press of a finger of the user; or
the mid-air gesture comprises a slide of a finger of the user in a preset direction in a mid-air manner.

10. A multi-interface display method, wherein the method is applied to a first electronic device, and the method comprises:
displaying, by the first electronic device, a first interface and displaying, in a floating window, a second interface; and
displaying, by the first electronic device, the second interface in a non-floating-window manner when detecting an operation gesture for the floating window.

11. The method according to claim 10, wherein the displaying, by the first electronic device, the second interface in a non-floating-window manner comprises: displaying the second interface in full screen or displaying the first interface and the second interface on a split screen.

12. The method according to claim 10 or 11, wherein the displaying, by the first electronic device, the second interface in a non-floating-window manner when detecting an operation gesture for the floating window comprises:
displaying, by the first electronic device, the second interface in full screen when detecting a first gesture for the floating window; or
displaying, by the first electronic device, the first interface and the second interface on the split screen when detecting a second gesture for the floating window.

13. The method according to claim 12, wherein the method further comprises:
associating, by the first electronic device, the first gesture with a full-screen display manner when receiving a first setting operation of a user; and/or
associating, by the first electronic device, the second gesture with a split-screen display manner when receiving a second setting operation of the user.

14. The method according to claim 10 or 11, wherein when receiving a display manner setting operation of the user, the first electronic device sets the non-floating-window display manner to a full-screen display manner or a split-screen display manner, wherein the display manner setting operation is used to indicate that the non-floating-window manner is either the full-screen display manner or the split-screen display manner.

15. The method according to any one of claims 10 to 14, wherein the first interface is a full-screen interface or the first interface is an interface displayed on a split screen with a third interface.

16. The method according to any one of claims 10 to 15, wherein the method further comprises:
highlighting, by the first electronic device, the second interface in response to the detected operation gesture.

17. The method according to any one of claims 10 to 16, wherein the operation gesture is a touch gesture or a mid-air gesture.

18. The method according to claim 17, wherein the touch gesture comprises a slide of a finger of the user in a preset direction, or a long press of a finger of the user; or
the mid-air gesture comprises a slide of a finger of the user in a preset direction in a mid-air manner.

19. An electronic device, comprising one or more processors and a display, wherein when the one or more processors are run, the electronic device is enabled to perform the method according to any one of claims 1 to 9 or the method according to any one of claims 10 to 18.

20. A computer program, wherein when the computer program is run on a computer, the computer is enabled to perform the method according to any one of claims 1 to 9 or the method according to any one of claims 10 to 18.

21. A computer-readable storage medium, comprising computer instructions, wherein when the computer instructions are run on an electronic device, the electronic device is enabled to perform the method according to any one of claims 1 to 9 or the method according to any one of claims 10 to 18.
